# EUROPEAN PATENT APPLICATION

(11) **EP 4 422 336 A1**
(43) Date of publication of application: **28.08.2024**
(21) Application number: 22882410.8
(22) Date of filing: 12.08.2022
(51) Int. Cl.: H04W 76/15

(54) **DATA TRANSMISSION METHOD, AND DEVICE AND STORAGE MEDIUM**

(30) Priority: 22.10.2021 CN 202111235530
(71) Applicant: ZTE Corporation, Shenzhen, Guangdong 518057 (CN)
(72) Inventor: NIU, Li, Shenzhen, Guangdong 518057 (CN); DAI, Bo, Shenzhen, Guangdong 518057 (CN); SHA, Xiubin, Shenzhen, Guangdong 518057 (CN); LU, Ting, Shenzhen, Guangdong 518057 (CN)
(74) Representative: Gevers Patents
(86) International application number: PCT/CN2022/111973
(87) International publication number: WO 2023/065790

(57) **Abstract**

Provided in the present application are a data transmission method, and a device and a storage medium. The data transmission method is applied to a first communication node and comprises: receiving a terminal aggregator communication (TAC) trigger condition pre-configured for a second communication node; and when the TAC trigger condition is met, transmitting data to the second communication node in a TAC mode.

## Description

This application claims a priority to Chinese Patent Application No. 202111235530.0 filed with the Chinese Patent Office on October 22, 2021, the entire content of the Chinese Patent Application is incorporated herein by reference.

### TECHNICAL FIELD

The present disclosure relates to the field of communication, and for example, to a data transmission method, a device and a storage medium.

### BACKGROUND

With the popularization of wireless communication technology, multiple terminals may exist in a certain area. For example, in a base station, many terminals, including a terminal close to the base station and a terminal far away from the base station, are distributed in various areas of the base station. The terminal close to the base station has a better channel quality for receiving a signal from the base station than the terminal far away from the base station. Alternatively, some terminals may be blocked by an obstacle, and the signal quality of a signal from the base station and received by these terminals is poor. In order to improve the reliability of data transmission, a terminal with good channel quality can help a terminal with poor channel quality to send a data packet. However, how to perform data transmission among two terminals and the base station is an urgent problem that needs to be solved.

### SUMMARY

Embodiments of the present disclosure provide a data transmission method, applied to a first communication node, the data transmission method includes:
receiving a terminal aggregator communication (TAC) triggering condition pre-configured by a second communication node;
in response to that the TAC triggering condition is met, transmitting data to the second communication node according to a TAC mode.

The embodiments of the present disclosure provide a data transmission method, applied to a second communication node, the data transmission method includes:
sending a pre-configured terminal aggregator transmission (TAC) triggering condition to a first communication node;
receiving data sent by the first communication node according to the TAC triggering condition.

The embodiments of the present disclosure provide a communication device, including: a memory, and one or more processors;
the memory is configured to store one or more programs,
the one or more programs, upon being executed by the one or more processors, cause the one or more processors to implement the method according to any of the embodiments described above.

The embodiments of the present disclosure provide a storage medium. The storage medium has stored thereon a computer program, where the computer program, upon being executed by a processor, implements the method according to any of the embodiments described above.

### BRIEF DESCRIPTION OF THE DRAWINGS

FIG. 1 is a schematic diagram of communication between a terminal and a base station provided by the related art.
FIG. 2 is a flowchart of a data transmission method provided by the embodiments of the present disclosure.
FIG. 3 is another flowchart of a data transmission method provided by the embodiments of the present disclosure.
FIG. 4 is a schematic diagram of a procedure for function registration provided by the embodiments of the present disclosure.
FIG. 5 is a schematic diagram of an interaction of user equipment (UE) capability information transmission between a base station and a terminal provided by the embodiments of the present disclosure.
FIG. 6 is a schematic diagram of an interaction of UE capability information transmission between terminals provided by the embodiments of the present disclosure.
FIG. 7 is a schematic diagram of an interaction of UE capability information transmission between a base station and an access and mobility management function (AMF) device provided by the embodiments of the present disclosure.
FIG. 8 is a schematic diagram of an establishment of an initialized connection between an AMF device and a base station provided by the embodiments of the present disclosure.
FIG. 9 is a schematic diagram of an interaction for transmitting a TAC indication message between a base station and a UE provided by the embodiments of the present disclosure.
FIG. 10 is a schematic diagram of an interaction for transmitting a node information report between a base station and a UE provided by the embodiments of the present disclosure.
FIG. 11 is a schematic diagram of an interaction of a reconfiguration between a base station and a UE provided by the embodiments of the present disclosure.
FIG. 12 is a schematic diagram of an interaction of a reconfiguration between UEs provided by the embodiments of the present disclosure.
FIG. 13 is a schematic diagram of an interaction of a communication request between UEs provided by the embodiments of the present disclosure.
FIG. 14 is a schematic diagram of an interaction of a connection confirmation message provided by the embodiments of the present disclosure.
FIG. 15 is another schematic diagram of an interaction of a connection confirmation message provided by the embodiments of the present disclosure.
FIG. 16 is yet another schematic diagram of an interaction of a connection confirmation message provided by the embodiments of the present disclosure.
FIG. 17 is a schematic diagram of an interaction of a starting transmission triggering message provided by the embodiments of the present disclosure.
FIG. 18 is a schematic diagram of an interaction of a failure feedback message between a local UE and a peer UE provided by the embodiments of the present disclosure.
FIG. 19 is a schematic diagram of an interaction of a failure feedback message between a local UE and a base station provided by the embodiments of the present disclosure.
FIG. 20 is a schematic diagram of an interaction of a failure feedback message among a local UE, a peer UE, and a base station provided by the embodiments of the present disclosure.
FIG. 21 is another schematic diagram of an interaction of a failure feedback message among a local UE, a peer UE, and a base station provided by the embodiments of the present disclosure.
FIG. 22 is another schematic diagram of an interaction of a first failure indication message between a local UE and a peer UE provided by the embodiments of the present disclosure.
FIG. 23 is another schematic diagram of an interaction of a second failure indication message between a local UE and a peer UE provided by the embodiments of the present disclosure.
FIG. 24 is another schematic diagram of an interaction of a failure indication message between a UE and a base station provided by the embodiments of the present disclosure.
FIG. 25 is another schematic diagram of an interaction of a first state switching message between a UE and a base station provided by the embodiments of the present disclosure.
FIG. 26 is another schematic diagram of an interaction of a first state switching message between an AMF device and a base station provided by the embodiments of the present disclosure.
FIG. 27 is a schematic diagram of an interaction of a random access channel (RACH) procedure among a base station, a local UE, and a peer UE provided by the embodiments of the present disclosure.
FIG. 28 is a schematic diagram of an interaction of an initialized message between a base station and an AMF device provided by the embodiments of the present disclosure.
FIG. 29 is a schematic diagram of an interaction of a second state switching message among a base station, a local UE, and a peer UE provided by the embodiments of the present disclosure.
FIG. 30 is a schematic diagram of an interaction of a radio resource control (RRC) request message between a base station and a UE provided by the embodiments of the present disclosure.
FIG. 31 is a schematic diagram of an interaction of a connection establishment triggering message between a base station and a UE provided by the embodiments of the present disclosure.
FIG. 32 is a structural block diagram of a data transmission apparatus provided by the embodiments of the present disclosure.
FIG. 33 is another structural block diagram of a data transmission apparatus provided by the embodiments of the present disclosure.
FIG. 34 is a structural schematic diagram of a data transmission device provided by the embodiment of the present disclosure.

### DETAILED DESCRIPTION

The embodiments of the present disclosure will be described below in connection with drawings. The present disclosure is described below in connection with the embodiments and drawings. The examples recited are merely used to illustrate the present disclosure and are not used to limit the scope of the present disclosure.

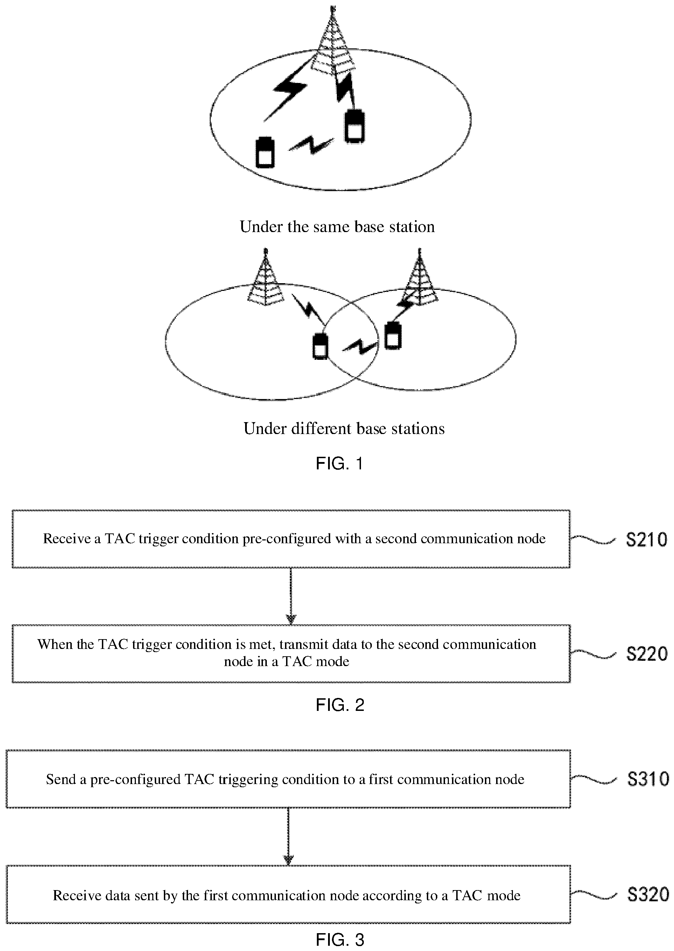

In order to improve the reliability of data transmission, a terminal with good channel quality can help a terminal with poor channel quality send a data packet. In this way, the data packet can be sent to a base station not only through the terminal with good channel quality, but also through the terminal with poor channel quality, and therefore, the base station may receive two copies of the same data packet, thereby the reliability is greatly increased. Or, in order to increase the speed of data transmission, the terminal with good channel quality can help the terminal with poor channel quality send the data packet. In this way, for an uplink data packet, the data packet can be sent to the base station not only through the terminal with good channel quality, but also through the terminal with poor channel quality, and therefore, the base station receives data packets from multiple terminals respectively, thereby a number of received data packets and the speed of transmission are greatly increased. For example, terminal 1 is located at the center of the base station, and thus, the channel quality of the terminal 1 is good. Terminal 2 is located at the edge of the base station, or the terminal 2 is blocked by an obstacle, and thus, channel quality of the terminal 2 is poor. The terminal 1 and the terminal 2 establish connections with the base station respectively, and a connection is established between the terminal 1 and the terminal 2, and may be a wired connection or a wireless connection, such as a WIFI connection or a sidelink connection. After the terminal 2 generates a data packet, the data packet is forwarded to the terminal 1. The terminal 1 can assist the terminal 2 to forward the data packet of the terminal 2 to the base station. Both the terminal 1 and the terminal 2 send data packets to the base station, respectively, such that the base station receives data packets from the terminal 1 and the terminal 2, respectively. FIG. 1 is a schematic diagram of communication between a terminal and a base station provided by the related art. As shown in FIG. 1, two terminals may be under the same base station, or the two terminals may be under different base stations, that is, each of the two terminals is connected to a different base station.

For a downlink data packet, the base station can send the data packet to the terminal with good channel quality, and the terminal with good channel quality can then forward the data packet to the terminal with poor channel quality. The base station can also directly send the data packet to the terminal with poor channel quality. The terminal with poor channel quality receives data packets from the base station and other terminal respectively, thereby the reliability, quantity, and transmission speed of the received data packets are greatly increased.

Under the base station, multiple terminals establish connections with the base station, connections are established between the multiple terminals, and a data packet of a terminal is forwarded by another terminal, thus this transmission method can be called terminal aggregator communication (TAC). It should be noted that the terminal aggregator communication may also be called terminal aggregator transmission.

An aggregator transmission of multiple terminals may be repeated transmissions, that is, multiple terminals transmit a same data packet via a radio interface; or the aggregator transmission of multiple terminals may be separate transmissions, that is, the multiple terminals transmit different data packets via a radio interface.

In a scheme of terminal aggregator transmission, a terminal that generates a data packet or a destination terminal to which the data packet is finally submitted is called an anchor UE; and a terminal that assists transmission is called a non-anchor UE.

In an embodiment, FIG. 2 is a flowchart of a data transmission method provided by the embodiments of the present disclosure. This embodiment can be performed by a data transmission device. The data transmission device may be a first communication node. The first communication node may be a terminal (e.g., the terminal may be a user equipment (UE)). As shown in FIG. 2, this embodiment includes: S21 0-S220.

In S210, a TAC triggering condition pre-configured by a second communication node is received.

The second communication node refers to a base station that establishes a communication connection with the first communication node. In an embodiment, there may be one or more first communication nodes that establish communication connections with the second communication node. Assuming that the first communication node is denoted as UE1 and another first communication node is denoted as UE2, and the UE1 performs assisted transmission through the UE2. A premise for UE1 to transmit data with the assistance of the UE2 is that: the transmission efficiency of assisted transmission is higher than that of repeated transmission of the first communication node. In the actual communication process, UE1 forwarding to UE2 needs to consume resources between terminals, and UE2 also needs to consume radio interface resources to send data. If the resources consumed between terminals (i.e., between UE1 and UE2) plus the radio interface resources consumed by UE2 are more than radio interface resources consumed by UE1 for sending data, a transmission efficiency of aggregator transmission of multiple UEs is not as good as that of repeated transmission of one UE. Therefore, when the first communication node determines to perform multi-terminal aggregator transmission, the first communication node needs to determine whether the pre-configured TAC triggering condition is met. It can be understood that the TAC triggering condition refers to a condition that triggers to perform a TAC operation between the first communication node and other first communication node (note: the other first communication node is different from the first communication node, and a number of the other first communication node may be one or more).

In S220, in response to that the TAC triggering condition is met, data is transmitted to the second communication node according to a TAC mode.

When the first communication node meets the TAC triggering condition, the first communication node transmits the data to other first communication node according to the TAC mode, so as to make the other first communication node forward the data to the second communication node, thereby ensuring that the TAC operation is triggered to be performed between the first communication node and the other first communication node only when the first communication node meets the TAC triggering condition, thus reducing the resource consumption while ensuring the reliability of data reception and increasing the transmission speed.

In an embodiment, the TAC triggering condition includes at least one of the following: a quality of service (QoS) of the first communication node meeting a corresponding QoS threshold value; the first communication node establishing a communication connection with other first communication node; the first communication node determining other first communication node that supports TAC. In an embodiment, the QoS can be characterized by one of the following parameters: a channel quality, a received signal strength, a traffic volume, a traffic type, a traffic latency, a traffic packet loss rate, a number of retransmission, and survival time. It can be understood that when the QoS is a different parameter, a corresponding QoS threshold value is also different, that is, each QoS parameter is configured with a corresponding QoS threshold value. For example, when the QoS parameter is the channel quality, the corresponding QoS threshold value is the channel quality threshold value; when the QoS parameter is the received signal strength, the corresponding QoS threshold value is the received signal strength threshold value, and the like. Other QoS parameters are also configured with corresponding QoS threshold values. It should be noted that the first communication node determining the other first communication node that supports TAC refers to that the first communication node discovers the other first communication node that can support TAC, that is, the first communication node obtains a capability (e.g., a capability for supporting TAC) of the other first communication node.

In an embodiment, the QoS of the first communication node meeting the corresponding QoS threshold value includes at least one of the following: a channel quality of the first communication node being lower than a channel quality threshold value; a received signal strength of the first communication node being lower than a received signal strength threshold value; a traffic volume of the first communication node being greater than a traffic volume threshold value; a traffic type of the first communication node meeting a traffic type of TAC or sidelink connection; a traffic latency of the first communication node being less than a traffic latency threshold value; a traffic packet loss rate of the first communication node being required to be less than a first packet loss rate threshold value; the traffic packet loss rate of the first communication being is greater than a second packet loss rate threshold value; a number of a retransmission of the first communication node being greater than a threshold value of a number of a retransmission; and a survival time of the first communication node being less than a survival time threshold value. In an embodiment, the QoS threshold value is configured through the second communication node, that is, the base station can configure the QoS threshold value through broadcasting or RRC. For example, at least one of the channel quality threshold value, the received signal strength threshold value, the traffic volume threshold value, the traffic type of TAC or sidelink connection, the traffic latency threshold value, the first packet loss rate threshold value, the second packet loss rate threshold value, the threshold value of a number of a retransmission and the survival time threshold value is configured through the broadcasting or RRC. The first packet loss rate threshold value refers to a packet error loss rate threshold value in traffic QoS parameters; the second packet loss rate threshold value refers to a packet loss rate threshold value of traffic hybrid automatic repeat request (HARQ) or a packet loss rate threshold value of automatic repeat request (ARQ).

In an embodiment, before the TAC triggering condition pre-configured by the second communication node is received, the data transmission method applied to the first communication node further includes: sending a function request message to a third communication node; receiving a function response message corresponding to the function request message fed back by the third communication node. The third communication node refers to a core network that establishes a communication connection with the second communication node. For example, the third communication node may be an access and mobility management function (AMF) device. In an embodiment, in order to support terminal aggregator transmission, the first communication node reports to the third communication node whether the first communication node itself supports terminal aggregator transmission during a process of function request, that is, the first communication node reports the function which is supported by the first communication node to the third communication node, or the first communication node requests the third communication node to authorize a function that can be supported by the first communication node itself.

In an embodiment, the function request message carries at least one of the following: an indication bit for supporting TAC; an indication bit for supporting copy function based TAC; an indication bit for supporting distribution function based TAC; frequency point information for supporting TAC; a communication node identification for TAC; an indication identification for supporting leading transmission based TAC; an indication identification for supporting assisted transmission based TAC; information of other communication node that jointly performs TAC. In an embodiment, the indicator for supporting TAC is used to indicate that the first communication node can support terminal aggregator transmission; the indicator for supporting copy function based TAC is used to indicate that the first communication node can support the copy function based terminal aggregator transmission; the indicator for supporting distribution function based TAC is used to indicate that the first communication node can support the distribution function based terminal aggregator transmission; the frequency point information for supporting TAC refers to frequency point information supported by the first communication node; the communication node identification for TAC refers to an identification of the first communication node for terminal aggregator (e.g., a first communication node that initiates a registration process), of course, the identification is used to identify a unique first communication node; the indication identification for supporting leading transmission based TAC is used to indicate an identification that supports a function of data generation or data final processing; the indication identification for supporting assisted transmission based TAC is used to indicate an identification of assisted transmission, that is, an identification that supports a function such as data forwarding; information of other communication node that jointly performs TAC refers to information of the other first communication node that can performs terminal aggregator transmission together with the first communication node.

In an embodiment, before the TAC triggering condition pre-configured by the second communication node is received, the data transmission method applied to the first communication node further includes: sending UE capability information of the first communication node to the second communication node or the other first communication node. In an embodiment, the first communication node may report its own capability information (i.e., UE capability information) to the second communication node, or the third communication node may send the UE capability information to the second communication node, or the first communication node may send its own capability information to the other first communication node.

In an embodiment, the UE capability information includes at least one of the following: a supporting situation for TAC; a supporting situation for copy function based TAC; a supporting situation for distribution function based TAC; frequency point information for supporting TAC; a communication node identification for TAC; a supporting situation for leading transmission based TAC; a supporting situation for assisted transmission based TAC; information of other communication node that jointly performs TAC. In an embodiment, the supporting situation for TAC refers to whether the first communication node supports terminal aggregator transmission; the supporting situation for copy function based TAC refers to whether the first communication node supports the copy function based terminal aggregator transmission; the supporting situation for distribution function based TAC refers to whether the first communication node supports the distribution function based terminal aggregator transmission; the frequency point information for supporting TAC refers to frequency information supported by the first communication node under a situation that the first communication node supports terminal aggregator transmission; the communication node identification for TAC refers to an identification of the first communication node for terminal aggregator transmission; the supporting situation for leading transmission based TAC refers to whether the first communication node that supports terminal aggregator transmission supports functions of data generation and final data processing; the supporting situation for assisted transmission based TAC refers to whether the first communication node that supports terminal aggregator transmission supports data forwarding function; the information of the other communication node that jointly performs TAC refers to information of the other first communication node that performs TAC together with the first communication node.

In an embodiment, the first communication node supports TAC and meets the TAC triggering condition; and the data transmission method applied to the first communication node further includes: sending a TAC indication message to the second communication node. In an embodiment, the TAC indication message is a related message used to indicate that the first communication node expects to support the TAC operation. In an embodiment, the TAC indication message includes at least one of the following: an indication for expecting TAC; an indication for expecting leading transmission based TAC; an indication for expecting assisted transmission based TAC; an indication for expecting copy function based TAC; an indication for expecting distribution function based TAC; a reason for TAC or a reason for expecting TAC; a traffic identification for expecting TAC.

In an embodiment, the first communication node supports TAC, and the data transmission method applied to the first communication node further includes: sending a node information report to the second communication node, where the node information report is used to characterize information of the other first communication node that establishes a connection with the first communication node. In an embodiment, the first communication node may initiate an establishment of a connection with the other first communication node, such as, establishing a WiFi connection, establishing a sidelink connection, etc. The first communication node that establishes the connection sends the node information report to the second communication node, such that the second communication node can support terminal aggregator transmission function of the first communication node. In a situation where the first communication node can support terminal aggregator transmission, the first communication node can report information of the other first communication node to the second communication node. In an embodiment, the node information report includes at least one of the following: indication information for the first communication node to support TAC; TAC capability information of the other first communication node; a first communication node identification; a measurement result of the other first communication node; a measurement result for the first communication node to measure the other first communication node; a distance between the first communication node and the other first communication node. In an embodiment, the indication information for the first communication node to support TAC is used to indicate that the first communication node supports TAC; the TAC capability information of the other first communication node refers to a capability for the other first communication node that establish terminal connection or candidate terminal aggregator transmission to support TAC; the first communication node identification may be a serving-temporary mobile subscriber identity (S-TMSI), used as a target identification to identify a unique UE in communication between the first communication node and the other first communication node; the measurement result of the other first communication node refers to a measurement result obtained by measuring a downlink signal of the second communication node under the execution of the other first communication node, or a measurement result obtained by measuring a downlink signal of the first communication node under the execution of the other first communication node; a measurement result for the first communication node to measure the other first communication node refers to a measurement result obtained by measuring a downlink signal of a peer first communication node through the first communication node; the distance between the first communication node and the other first communication node refer to a distance or a distance range between a position of the first communication node and a position of a peer first communication node that establishes a terminal connection with the first communication node.

In an embodiment, the first communication node is a communication node that generates a data packet, and the other first communication node is a communication node that forwards the data packet generated by the first communication node to the second communication node; the data transmission method applied to the first communication node further includes: receiving first reconfiguration information sent by the second communication node. In an embodiment, under a situation where the first communication node is a communication node that generates the data packet, it can be understood that the first communication node is an anchor UE; under a situation where the other first communication node is a communication node that forwards the data packet generated by the first communication node to the second communication node, it can be understood that the other first communication node is a non-anchor UE. It should be noted that the first reconfiguration information sent by the second communication node includes both configuration information for the first communication node and configuration information for the other first communication node. In an embodiment, under a situation where the second communication node determines that a certain traffic of the first communication node is provided with terminal aggregator transmission by the other first communication node, the second communication node sends the first reconfiguration information to the first communication node (including an anchor UE and a non-anchor UE).

In an embodiment, the first reconfiguration information includes at least one of the following: configuring an identification of the other first communication node for the first communication node; configuring a traffic identification supporting TAC for the first communication node; configuring a deleted-traffic identification supporting TAC for the first communication node; configuring configuration information of a first interface corresponding to the first communication node for the first communication node; configuring a packet data convergence protocol (PDCP) function for the first communication node; configuring connection configuration information between the first communication node and the other first communication node for the first communication node; configuring an association of a data resource bearer (DRB) or a PDCP of the first interface associated with first communication node, and a DRB or a logical channel between the first communication node and other first communication node for the first communication node; configuring an association of a DRB or a PDCP of the first interface associated with first communication node, and a DRB or a logical channel of the other first communication node for the first communication node; configuring an identification of the first communication node for the other first communication node; configuring a traffic identification supporting TAC for the other first communication node; configuring a deleted-traffic identification supporting TAC for the other first communication node; configuring configuration information of a first interface corresponding to the other first communication node for the other first communication node; configuring connection configuration information between the first communication node and the other first communication node for the first communication node and the other first communication node; configuring an association of a DRB or a logical channel of the first interface associated with the other first communication nodes, and a DRB or a logical channel between the first communication node and the other first communication node for the other first communication node; configuring an association of a DRB or a PDCP of the first interface associated with the other first communication nodes, and a DRB or a logical channel of the other first communication node for the other first communication node.

In an embodiment, bearer information of the first reconfiguration information is a radio resource control (RRC) message; the RRC message includes one of the following: configuration information for the first communication node; configuration information for the other first communication node; configuration information for the first communication node and the other first communication node. In an embodiment, the first reconfiguration information may be partially or fully encapsulated in an RRC message. For example, the configuration information for the first communication node can be encapsulated as a piece of RRC message; the configuration information for the other first communication node can also be encapsulated as a piece of RRC message; and all parameters included in the first reconfiguration information can be encapsulated as a piece of RRC message.

In an embodiment, sidelink communication is performed between the first communication node and the other first communication node, and the data transmission method applied to the first communication node further includes: sending second reconfiguration information to the other first communication node. In an embodiment, the first communication node may be an anchor UE, correspondingly, the other first communication node may be a non-anchor UE. Sidelink communication is supported between the first communication node and the other first communication node, and then, the first communication node sends the second reconfiguration information to the other first communication node. In an embodiment, the second reconfiguration information refers to related information configured by the second communication node for the other first communication node.

In an embodiment, the second reconfiguration information includes at least one of the following: configuring an identification of the first communication node for other first communication node; configuring a traffic identification supporting TAC for other first communication node; configuring a deleted-traffic identification supporting TAC for other first communication node; configuring configuration information of a first interface corresponding to other first communication node for the other first communication node; configuring connection configuration information between the first communication node and the other first communication node for the first communication node and the other first communication node; configuring an association of a DRB or a logical channel of the first interface associated with the other first communication nodes, and a DRB or a logical channel between the first communication node and other first communication nod for the other first communication node; configuring an association of a DRB or a PDCP of the first interface associated with the other first communication nodes, and a DRB or a logical channel of the other first communication node for the other first communication nodes.

In an embodiment, bearer information of the second reconfiguration information is an RRC message; the RRC message includes: configuring a traffic identification supporting TAC for the other first communication node; configuring a deleted-traffic identification supporting TAC for the other first communication node; configuring configuration information of a first interface corresponding to the other first communication node for the other first communication node. In an embodiment, some or all parameters in the second reconfiguration information may be encapsulated in an RRC message.

In an embodiment, sidelink communication is performed between the first communication node and other first communication node, and the data transmission method applied to the first communication node further includes: receiving third reconfiguration information sent by the second communication node. In an embodiment, the first communication node may be an anchor UE, correspondingly, the other first communication node may be a non-anchor UE. Sidelink communication is supported between the first communication node and the other first communication node, and then, the other first communication node sends the third reconfiguration information to the first communication node. In an embodiment, the third reconfiguration information refers to related information configured by the second communication node for the first communication node.

In an embodiment, the third reconfiguration information includes at least one of the following: configuring an identification of other first communication node for the first communication node; configuring a traffic identification supporting TAC for the first communication node; configuring a deleted-traffic identification supporting TAC for the first communication node; configuring configuration information of a first interface corresponding to the first communication node for the first communication node; configuring a PDCP function for the first communication node; configuring connection configuration information between the first communication node and the other first communication node for the first communication node; configuring an association of a data resource bearer (DRB) or a PDCP of the first interface associated with first communication node, and a DRB or a logical channel between the first communication node and other first communication node for the first communication node; configuring an association of a DRB or a PDCP of the first interface associated with first communication node, and a DRB or a logical channel of the other first communication node for the first communication node.

In an embodiment, bearer information of the third reconfiguration information is an RRC message; the RRC message includes: configuring an identification of the other first communication node for the first communication node; configuring a traffic identification supporting TAC for the first communication node; configuring a deleted-traffic identification supporting TAC for the first communication node; configuring configuration information of a first interface corresponding to the first communication node for the first communication node; configuring a PDCP function for the first communication node. In an embodiment, some or all parameters in the third reconfiguration information may be encapsulated in an RRC message.

In an embodiment, a terminal aggregator based terminal connection is established between the first communication node and the other first communication node. The data transmission method applied to the first communication node further includes: receiving a communication request message sent by the other first communication node; feeding back a communication response message corresponding to the communication request message to the other first communication node. In an embodiment, under a situation where a first communication node establishes a terminal aggregator based terminal connection with the other first communication node, if the other first communication node support the sidelink connection, the communication request message carries information about terminal aggregator transmission.

In an embodiment, the communication request message includes at least one of the following: a message for the first communication node to expect TAC; a message for the first communication node to expect copy function based TAC, a message for the first communication node to expect distribution function based TAC; a message for the first communication node to expect TAC, supporting assisted transmission and supporting a data forwarding function; an identification of the first communication node; a QoS parameter of TAC; a cell identification or a second communication node identification corresponding to the first communication node.

The communication response message includes at least one of the following: an identification of the first communication node; a QoS parameter of TAC; a cell identification or a second communication node identification corresponding to the first communication node. In an embodiment, the identification of the first communication node may be an S-TMSI, a radio network temporary identity (RNTI), etc.

In an embodiment, transmitting data to the second communication node according to a TAC mode includes: transmitting the data to other first communication node according to the TAC mode, so as to make the other first communication node transmit the data to the second communication node. It should be noted that under a situation where the first communication node is a local UE, the other first communication node may be a peer UE. In an embodiment, the local UE transmits data to the peer UE that establishes a communication connection with the local UE, and the peer UE forwards the data to the second communication node, thereby realizing aggregator transmission between terminals.

In an embodiment, before performing the aggregator transmission between two first communication nodes, that is, before the first communication node forwarding the data packet to the other first communication node, so as to make the other first communication node send the data packet to the second communication node, the first communication node ensures that the connection between the first communication node and the other first communication node is successfully established, and a first interface connection between the other first communication node and the second communication node is successfully established. After the first communication node completes these operations, the first communication node sends data to other first communication node, thereby avoiding the phenomenon of data loss caused by data forwarding failure.

In an embodiment, the connection confirmation message may be sent to the second communication node through the other first communication node that establishes a connection with the first communication node, or the connection confirmation message may be sent directly to the second communication node through the first communication node.

In an embodiment, before transmitting data to the second communication node according to a TAC mode, the method further includes: sending a first connection confirmation message to the second communication node through the other first communication node corresponding to the first communication node; sending a second connection confirmation message to the second communication node. In an embodiment, the first connection confirmation message refers to information about confirming a successful connection between the other first communication node and the first communication node, and between the other first communication node and the second communication node. The second connection confirmation message refers to information about confirming a successful connection between the first communication node and the other first communication node, and between the first communication node and the second communication node. It can be understood that the first communication node and the other first communication node send corresponding connection confirmation messages to the second communication node, respectively.

In an embodiment, before transmitting data to the second communication node according to a TAC mode, the method further includes: receiving a third connection confirmation message sent by the other first communication node; sending the third connection confirmation message to the second communication node. In an embodiment, the third connection confirmation message refers to information about confirming a successful connection between the first communication node and the other first communication node, between the first communication node and the second communication node, and between the other first communication node and the second communication node. It can be understood that the third connection confirmation message is a union of the first connection confirmation message and the second connection confirmation message. In an embodiment, a message about confirming a successful connection between the first communication node and the second communication node, a message about confirming a successful connection between the other first communication node and the second communication node, and a message about confirming a successful connection between the first communication node and the other first communication node are all sent to the second communication node through the first communication node.

In an embodiment, the connection confirmation message includes: a node identification of the other first communication node that successfully establishes a connection; or, a node identification of the other first communication node that fails to establish a connection and a failure reason. In an embodiment, when the first communication node successfully establishes a terminal connection with the other first communication node, the connection confirmation message carries the node identification of the other first communication node that successfully establishes the connection; when the first communication node fails to establish a terminal connection with a certain first communication node, the connection confirmation message carries a node identification of the other first communication node that fails to establish a connection. Of course, when the terminal connection with the other first communication node fails to be established, the connection confirmation message carries the failure reason. For example, the failure reason may include at least one of the following: the first communication node failing to be connected with the other first communication node, and the other first communication node failing to be connected with the base station; the channel quality of the first communication node deteriorating, etc.

In an embodiment, the first communication node is a communication node that generates a data packet; the data transmission method applied to the first communication node further includes: receiving a starting transmission triggering message sent by the second communication node. In an embodiment, the starting transmission triggering message is used to characterize that connections have been successfully established between the first communication node, the other first communication nodes, and the second communication node, so as to ensure the effectiveness of data forwarding and avoid the phenomenon of data loss.

In an embodiment, the starting transmission triggering message includes one of the following: an RRC message; a medium access control-control element (MAC CE) message;
where the RRC message carries at least one of the following: an identification bit for a terminal aggregator being successfully established; a DRB identification supporting the terminal aggregator; and a first communication node identification for successfully establishing a terminal aggregator traffic;
the MAC CE message carries one of the following: an identification bit for a terminal aggregator being successfully established; an identification bit for starting transmission. In an embodiment, the second communication node may send the starting transmission triggering message to the first communication node through an RRC message, or may send the starting transmission triggering message to the first communication node through an MAC CE message.

In an embodiment, the starting transmission triggering message includes: a feedback duration of the connection confirmation message reaching a preset duration.

In an embodiment, the first communication node fails to establish a connection with the other first communication node, the data transmission method applied to the first communication node further includes: receiving a failure feedback message sent by the other first communication node; where the failure feedback message includes: a failure indication, or a failure reason. In an embodiment, when the other first communication node fails to establish a connection with the first communication node, or fails to establish a connection with the second communication node, the other first communication node sends the failure feedback message to the first communication node, and the failure feedback message carries a failure indication or a failure reason. The failure reason may be an encryption failure, a poor channel quality, etc.

In an embodiment, if the first communication node fails to establish a connection with the other first communication node, the data transmission method applied to the first communication node further includes: sending a failure feedback message to the second communication node, so as to make the second communication node indicate a failure message or a reconfiguration message to the other first communication node according to the failure feedback message; where the failure feedback message includes: a failure indication, or, a failure reason. In an embodiment, when the first communication node fails to establish a connection with the second communication node, or fails to successfully establish a connection with the other first communication node, or the other first communication node fails to establish a connection with the second communication node, the first communication node sends a failure feedback message to the second communication node.

In an embodiment, the first communication node fails to establish a connection with the other first communication node, the data transmission method applied to the first communication node further includes: receiving a failure message or a reconfiguration message indicated by the second communication node according to a failure feedback message sent by the other first communication node. When the first communication node fails to establish a connection with the second communication node, or fails to establish a connection with the other first communication node, or the other first communication node fails to establish a connection with the second communication node, the other first communication node sends the failure feedback message to the second communication node, and the second communication node indicates the failure message or the reconfiguration message to the first communication node according to the failure feedback message.

In an embodiment, a situation where a wireless connection failure occurs in a wireless connection between the other first communication node and the second communication node, the data transmission method applied to the first communication node further includes: receiving a first failure indication message sent by the other first communication node; sending the first failure indication message to the second communication node. In an embodiment, when a wireless connection failure occurs in the wireless connection between the other first communication node and the second communication node, the other first communication node indicates the failure message to the first communication node (i.e., sending the first failure indication message), and after the first communication node receives the first failure indication message, the connection between the other first communication node and the second communication node is regarded as a failure.

In an embodiment, a situation where a wireless connection failure occurs in a wireless connection between the first communication nodes and the second communication node, the data transmission method applied to the first communication node further includes: sending a second failure indication message to the other first communication node, so as to make the other first communication node send the second failure indication message to the second communication node. In an embodiment, when the wireless connection failure occurs in the wireless connection between the first communication node and the second communication node, the first communication node indicates a failure message to the other first communication node (i.e., sending the second failure indication message), and after the other first communication node receives the second failure indication message, the connection between the first communication node and the second communication node is regarded as a failure.

In an embodiment, the first communication node is configured to forward a data packet generated by the other first communication node, and the first communication node is in an idle state; the data transmission method applied to the first communication node further includes: receiving a first state switching message sent by the second communication node; switching from the idle state to a connecting state according to the first state switching message. In an embodiment, after the second communication node selects the other first communication node to establish terminal aggregator for the first communication node, if the other first communication node is in an idle state or in an inactive state, the other first communication node needs to enter a connecting state before starting the terminal aggregator transmission. In an embodiment, the first state switching message is used to indicate a message for entering a connecting state. For example, the first state message may be a paging message or other messages, which is not limited herein. Furthermore, the first state switching message carries the S-TMSI of the first communication node, and can also carry an identification.

In an embodiment, the first communication node is configured to forward a data packet generated by the other first communication node, and the first communication node is in an idle state; the data transmission method applied to the first communication node further includes: receiving first connection configuration information and/or second connection configuration information sent by the second communication node, where the first connection configuration message or the second connection configuration message carries a random access channel (RACH) resource.

In an embodiment, the first communication node is configured to forward a data packet generated by the other first communication node, and the first communication node is in an idle state; the data transmission method applied to the first communication node further includes: receiving an interface connection establishment request triggered by the second communication node, so as to make the first communication node switch to an connecting state.

In an embodiment, the first communication node is configured to forward a data packet generated by the other first communication node, and the first communication node is in an idle state; the data transmission method applied to the first communication node further includes: receiving a second state switching message sent by the first communication node and triggering the first communication node to switch to a connecting state. In an embodiment, the second state switching message refers to a message that triggers the first communication node to enter a connecting state. The second state switching message may be a UE capability inquiry sidelink, an RRC reconfiguration sidelink, a paging message or other messages.

In an embodiment, the data transmission method applied to the first communication node further includes: sending an RRC request message to the second communication node, where the RRC request message carries a reason for establishing a connection. In an embodiment, when the first communication node is in a connecting state, the first communication node sends the RRC request message to the second communication node, and the RRC request message carries the reason for establishing the connection.

In an embodiment, the data transmission method applied to the first communication node further includes: receiving a connection establishment triggering message sent by the second communication node;
the connection establishment triggering message includes at least one of the following: an indication for establishing an aggregator transmission or a sidelink connection; an identification of the first communication node that is a candidate for establishing a connection; an indication for successfully establishing a connection; an identification of the first communication node that successfully establishes a connection; UE capability information for successfully establishing a connection; a measurement result for the first communication node that successfully establishes a connection to measure a downlink signal of the second communication node.

In an embodiment, FIG. 3 is another flowchart of a data transmission method provided by the embodiments of the present disclosure. This embodiment can be performed by a data transmission device. The data transmission device may be a second communication node. The second communication node may be a base station. As shown in FIG. 3, this embodiment includes: S31 0-S320.

In S310, a pre-configured TAC triggering condition is sent to a first communication node.

In S320, data sent by the first communication node according to a TAC mode is received.

In an embodiment, the second communication node pre-configures the TAC triggering condition and sends the TAC triggering condition to the first communication node, so as to make the first communication node perform data transmission according to the TAC mode in response that the TAC triggering condition is met.

In an embodiment, the data transmission method applied to the second communication node further includes: receiving a communication establishment request message sent by a third communication node; and feeding back a communication establishment response message corresponding to the communication establishment request message to the third communication node. The third communication node refers to a core network that establishes a communication connection with the second communication node. In an embodiment, in order to support terminal aggregator transmission, the third communication node may inform the second communication node whether the first communication node supports terminal aggregator transmission during a process of traffic establishment or a process of establishing the terminal connection, so as to facilitate the second communication node to select whether to configure terminal aggregator transmission for the first communication node. It can be understood that the communication establishment request message is used to carry related information that the first communication node supports terminal aggregator transmission. In an embodiment, the communication establishment request message includes at least one of the following: indication information that the first communication node is authorized to support TAC; information of other first communication node that jointly performs TAC; UE capability information of other first communication node that jointly performs TAC; frequency point information supporting TAC; and traffic that supports TAC. In an embodiment, after the second communication node receives the communication establishment request message sent by the third communication node, the second communication node feeds back the communication establishment response message to the third communication node, so as to make the third communication node obtain an identification of whether the first communication node successfully establishes terminal aggregator transmission, or an identification that terminal aggregator transmission is successfully established.

In an embodiment, the data transmission method applied to the second communication node further includes: receiving UE capability information sent by the first communication node.

In an embodiment, the first communication node supports TAC and meets the TAC triggering condition; the method further includes:
receiving TAC indication information sent by the first communication node.

In an embodiment, the first communication node supports TAC, and the data transmission method applied to the second communication node further includes: receiving a node information report sent by the first communication node; where the node information report is used to characterize information of the other first communication node that establishes a connection with the first communication node.

In an embodiment, the first communication node is a communication node that generates a data packet, and the other first communication node is a communication node that forwards the data packet generated by the first communication node to the second communication node, and the data transmission method applied to the second communication node further includes: sending first reconfiguration information to the first communication node.

In an embodiment, the first communication node is a communication node that generates a data packet; the data transmission method applied to the second communication node further includes: sending a starting transmission triggering message to the first communication node.

In an embodiment, the first communication node fails to establish a connection with the other first communication node, the data transmission method applied to the second communication node further includes: receiving a failure feedback message sent by the first communication node; indicating a failure message or a reconfiguration message to the other first communication node according to the failure feedback message; where the failure feedback message includes: a failure indication, or a failure reason.

In an embodiment, the first communication node fails to establish a connection with the other first communication node, the data transmission method applied to the second communication node further includes: receiving the failure feedback message sent by the other first communication node; indicating a failure message or a reconfiguration message to the first communication nodes according to the failure feedback message; where the failure feedback message includes: a failure indication, or a failure reason.

In an embodiment, the first communication node is configured to forward a data packet generated by the other first communication node, and the first communication node is in an idle state; the data transmission method applied to the second communication node further includes: sending a first state switching message to the first communication node, so as to make the first communication node switch from the idle state to a connecting state according to the first state switching message.

It should be noted that the explanation of various parameters corresponding to the data transmission method applied to the second communication node can be found in the description of the data transmission method applied to the first communication node in the above embodiments, and is not repeated herein.

In the first embodiment, taking the first communication node being a UE and the second communication node being a base station as an example, a configuration process of a TAC triggering condition is illustrated. It should be noted that a premise for a terminal (e.g., UE1) to assist in transmission through another terminal (e.g., UE2) is that the transmission efficiency of assisted transmission is higher than that of the repeated transmission of the terminal. Because not only does UE1 forwarding to UE2 consume a resource between terminals, but also UE sending data consumes a radio interface resource. If a resource consumed between terminals plus a radio interface resource consumed by UE2 are more than a radio interface resource consumed by UE1 for sending data, the transmission efficiency of aggregator transmission of multiple UEs is not as good as that of repeated transmission of one UE. Therefore, when a UE determines to perform aggregator transmission of multiple terminals, some conditions need to be considered, that is, if UE1 meets the TAC triggering condition, UE1 is triggered to assist in data transmission through UE2.

When a UE decides to initiate aggregator transmission of multiple terminals or establish a wired or wireless terminal link with multiple UEs, the TAC triggering condition that needs to be met includes:

Condition 1: a channel quality of a UE is lower than a channel quality threshold value. In an embodiment, a base station may broadcast a channel quality threshold value for establishing terminal aggregator transmission or terminal link or configure the channel quality threshold value by RRC. After the UE receives the channel quality threshold value sent by the base station, the channel quality of the UE is compared with the channel quality threshold value. If the channel quality of the UE is lower than the channel quality threshold value, that is, a channel state of the UE is not good, the UE can establish terminal aggregator transmission or terminal link, or the UE can establish copy function based terminal aggregator transmission or terminal link. The channel quality refers to a channel quality of a downlink signal of the base station measured by the UE, including: a channel quality indication (CQI), etc.

Condition 2: a received signal strength of a UE is lower than a received signal strength threshold value. In an embodiment, the base station may broadcast a received signal strength threshold value for establishing terminal aggregator transmission or terminal link or configure the received signal strength threshold value by RRC. After the UE receives the received signal strength threshold value sent by the base station, the received signal strength of the UE is compared with the received signal strength threshold value. If the received signal strength of the UE is lower than the received signal strength threshold value, that is, a channel state of the UE is not good, the UE can establish terminal aggregator transmission or terminal link, or the UE can establish copy function based terminal aggregator transmission or terminal link. The received signal strength is a channel strength of the base station received by the UE and measured by the UE, including a reference signal receiving power (RSRP), a reference signal receiving quality (RSRQ), etc.

Condition 3: a traffic volume of a UE exceeds a traffic volume threshold value. In an embodiment, the base station may broadcast a traffic volume threshold value for establishing terminal aggregator transmission or terminal link or configure the traffic volume threshold value by RRC. After the UE receives the traffic volume threshold value sent by the base station, a traffic volume of the UE is compared with the traffic volume threshold value. If the traffic volume of the buffer in the UE or an amount of data to be transmitted exceeds the traffic volume threshold value, that is, the UE has a lot of data to be transmitted, and the UE can establish terminal aggregator or terminal link, or the UE can establish distribution function based terminal aggregator transmission or terminal link.

Condition 4: a traffic type of the UE meets a traffic type for establishing a TAC or a sidelink connection. In an embodiment, the base station may broadcast a traffic type for establishing terminal aggregator transmission or terminal link or configure the traffic type by RRC. For example: QoS class identifier (QCI) in traffic QoS parameters, etc. The UE judges that if a traffic link established by the UE conforms to the traffic type, for example: a QCI of the traffic established by the UE is as the same as the QCI indicated by the base station, that is, the UE has a certain traffic that has features of a great amount of data and being sensitive to the transmission latency, the UE can establish terminal aggregator or terminal link. Alternatively, the base station may broadcast a traffic type about distribution function based terminal aggregator transmission or terminal link or configures the traffic type by RRC, for example: QCI in the traffic QoS parameters, etc. The UE judges that if the traffic link established by the UE conforms to the traffic type, for example: the QCI of the traffic of the UE is as the same as the QCI indicated by the base station, that is, the UE has a certain traffic that has features of a great amount of data, and being sensitive to transmission latency, etc., the UE can establish distribution function based terminal aggregator transmission or terminal link. Alternatively, the base station may broadcast a traffic type about copy function based terminal aggregator transmission or terminal link or RRC configures the traffic type, for example: QCI in the traffic QoS parameters, etc. The UE judges that if the traffic link established by the UE conforms to the traffic type, for example: the QCI of the traffic of the UE is as the same as the QCI indicated by the base station, that is, the UE has a certain traffic that has the features of high reliability requirements, etc., the UE can establish copy function based terminal aggregator transmission or terminal link.

Condition 5: a traffic latency of a UE is less than a traffic latency threshold value. In an embodiment, the base station broadcasts a traffic latency threshold value (for example: a packet delay budget (PDB) threshold value in the traffic QoS parameters) for terminal aggregator transmission or terminal link or configures the traffic latency threshold value by RRC. The UE judges that if a traffic latency of the traffic established by the UE is less than the traffic latency threshold value, for example: a PDB value of the traffic established by the UE is less than the traffic latency threshold value, that is, the UE has latency-sensitive traffic, the UE can establish terminal aggregator or terminal link, or the UE can establish distribution function based terminal aggregator transmission or terminal link.

Condition 6: a traffic packet loss rate of a UE is required to be less than a first packet loss rate threshold value. In an embodiment, the base station broadcasts a threshold value (i.e., the first packet loss rate threshold value) required for the traffic packet loss rate for establishing terminal aggregator transmission or terminal link or configures the threshold value by RRC. For example: the threshold value may be a packet loss rate threshold value in the traffic QoS parameters. The UE judges that if a traffic packet loss rate of a traffic established by the UE is required to be less than the threshold value, for example: a PELR value of the traffic of the UE is less than the threshold value, that is, the UE has a traffic with a high reliability requirement, the UE can establish terminal aggregator or terminal link, or the UE can establish copy function based terminal aggregator transmission or terminal link.

Condition 7: the traffic packet loss rate of the UE is greater than a second packet loss rate threshold value. In an embodiment, the base station broadcasts a threshold of traffic packet loss rate for establishing terminal aggregator transmission or terminal link (i.e., the second packet loss rate threshold) or configures the threshold by RRC. For example: the threshold may be a threshold value of hybrid automatic repeat request (HARQ) packet loss rate or automatic repeat request (ARQ) packet loss rate of the traffic. The UE judges that if the traffic packet loss rate of the traffic established by the UE is greater than the threshold value, for example: the HARQ packet loss rate or ARQ packet loss rate of the traffic of the UE is greater than the threshold, that is, the traffic packet loss rate of the terminal is relatively high, the UE can establish terminal aggregator or terminal link, or the UE can establish copy function based terminal aggregator transmission or terminal link.

Condition 8: a number of a retransmission of the UE is greater than a threshold value of number of a retransmission. In an embodiment, the base station broadcasts a threshold value of a number of a retransmission for establishing terminal aggregator transmission or terminal link or RRC configures the threshold value by RRC. For example: the threshold value may a threshold value of a number of an HARQ retransmission or a number of an ARQ retransmission of the traffic. The UE judges that if the number of the retransmission of the traffic established by the UE is greater than the threshold value of the number of retransmission, for example: the number of the HARQ retransmission or the number of the ARQ retransmission of the traffic of the UE is greater than the threshold value of number of the retransmission, that is, the number of the retransmission of the traffic of the terminal is relatively high, and a transmission latency is relatively large, the UE can establish terminal aggregator or terminal link, or the UE can establish copy function based terminal aggregator transmission or terminal link.

Condition 9: the survival time of the UE is less than a survival time threshold value. In an embodiment, the base station broadcasts a survival time threshold value for establishing terminal aggregator transmission or terminal link or configures the survival time threshold value by RRC. For example: the survival time threshold value may be a survival time or a survival time threshold value of the traffic. The UE judges that if the survival time of the traffic established by the UE is less than the survival time threshold value, for example: the survival time value of the traffic of the UE is less than the survival time threshold value, that is, a traffic latency sensitivity of the terminal is low, the UE can establish terminal aggregator or terminal link, or the UE can establish distribution function based terminal aggregator transmission or terminal link.

Condition 10: the UE establishes a terminal connection. In an embodiment, if the UE establishes a terminal connection with other UE, for example, the UE has established a wired or wireless connection with other UE, the UE can establish terminal aggregator.

Condition 11: the UE discovers other UE that can support terminal aggregator transmission. If the UE discovers other UE that can support terminal aggregator transmission, for example, the UE obtains a capability of the other UE (e.g., supporting terminal aggregator) by subscription information, core network configuration, or establishment of a wired or wireless connection, the UE can establish terminal aggregator.

In an embodiment, the above TAC triggering conditions can be used alone or in combination, for example, condition 8 and condition 11, that is, the UE discovering other UE that can support terminal aggregator transmission, and the number of the retransmission of the UE exceeds the threshold value of number of the retransmission, the UE can establish terminal aggregator transmission.

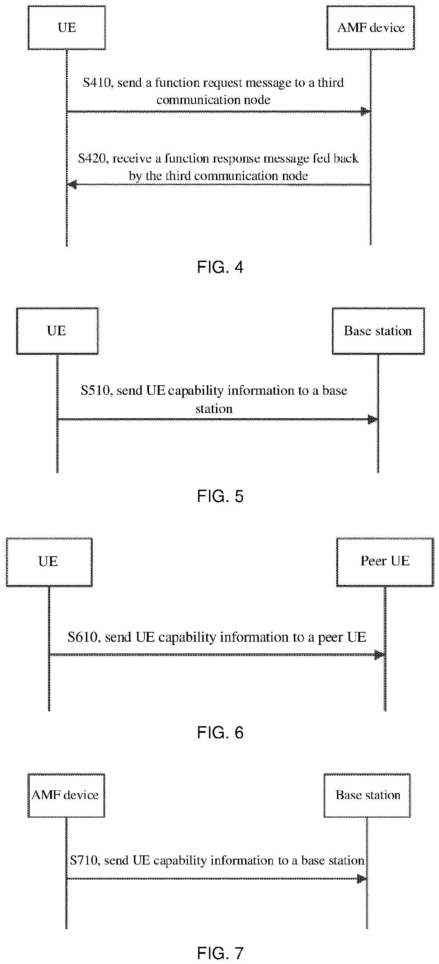

In the second embodiment, taking the first communication node being a UE and the third communication node being an AMF device as an example, a registration procedure between the UE and the AMF device is illustrated. FIG. 4 is a schematic diagram of a procedure for function registration provided by the embodiments of the present disclosure. As shown in FIG. 4, the procedure for function registration in an embodiment includes S410-S420.

In S410, a function request message is sent to a third communication node.

In S420, a function response message fed back by the third communication node is received.

In an embodiment, the UE needs to report a function supported by the UE to the core network (e.g., the AMF device), or the UE requests authorization from the core network. The UE initiates a function request message to the core network, informs the core network of a function supported by the UE and requests a function supported by the core network. For example, in a registration request, the UE reports which communication types the UE supports, such as V2X, etc. After the core network is informed, the core network can choose whether to support these functions of the UE and select a corresponding strategy.

In order to support terminal aggregator transmission, the UE can report whether the UE itself supports terminal aggregator transmission through a function request message during a process of function request. For example, the function request message may be a registration request message, and the function request message may carry at least one of the following parameters: an indication bit for supporting TAC; an indication bit for supporting copy function based TAC; an indication bit for supporting distribution function based TAC; frequency point information supporting TAC; a communication node identification for TAC; an indication identification for supporting leading transmission based TAC; an indication identification for supporting assisted transmission based TAC; information of other communication node that jointly performs TAC.

For a case where the function request message carries the indication bit for UE to support TAC, if the UE supports terminal aggregator transmission, the function request message carries the indication bit for UE to support TAC, indicating that the UE supports terminal aggregator transmission.

For a case where the function request message carries the indication bit for UE to support copy function based TAC, if the UE supports copy function based terminal aggregator transmission, the function request message carries the indication bit for UE to support copy function based TAC, indicating that the UE supports copy function based terminal aggregator transmission.

For a case where the function request message carries the indication bit for UE to support distribution function based TAC, if the UE supports distribution function based terminal aggregator transmission, the function request message carries the indication bit for UE to support distribution function based TAC, indicating that the UE supports distribution function based terminal aggregator transmission.

For a case where the function request message carries frequency point information that UE supports, if the UE supports terminal aggregator transmission, the function request message carries the frequency point information that UE supports.

For a case where the function request message carries an identification of the UE for TAC, if the UE supports terminal aggregator transmission, the function request message carries an identification of the UE for the terminal aggregator (e.g., a UE that initiates the registration request procedure), which is used to identify a unique UE.

For a case where the function request message carries an identification for indicating of supporting leading transmission based terminal aggregator transmission, if the UE supports a function of an anchor UE, for example, the leading transmission in the terminal aggregator transmission, supports a function of data generation and data final processing, the function request message carries an indication for UE supporting leading transmission based terminal aggregator transmission.

For a case where the function request message carries an identification for indicating of supporting assisted transmission based terminal aggregator transmission, if the UE supports a function of a non-anchor UE, for example, the assisted transmission in the terminal aggregator transmission, supports data forwarding and other functions, the function request message carries an indication of UE supporting the assisted transmission based terminal aggregator transmission.

For a case where the function request message can carry information of other UE that jointly performs TAC, if the UE supports terminal aggregator transmission, the function request message can carry which UEs (e.g., a candidate non-anchor UE, a candidate anchor UE) can perform terminal aggregator transmission together, the function request message can carry information of these UEs, such as a UE identification, an identification of whether leading transmission based terminal aggregator transmission is supported, an identification of whether assisted transmission based terminal aggregator transmission is supported, etc.

In an embodiment, taking the first communication node being a UE, the second communication node being a base station (denoted as a gNB), and the third communication node being an AMF device as an example, the transmission process of UE capability information is illustrated. FIG. 5 is a schematic diagram of an interaction of UE capability information transmission between a base station and a terminal provided by the embodiments of the present disclosure. FIG. 6 is a schematic diagram of an interaction of UE capability information transmission between a terminal and another terminal provided by the embodiments of the present disclosure. FIG. 7 is a schematic diagram of an interaction of UE capability information transmission between a base station and an AMF device provided by the embodiments of the present disclosure. As shown in FIG. 5, S510 is included.

In S510, UE capability information is sent to a base station.

As shown in FIG. 6, S610 is included.

In S610, UE capability information is sent to a peer UE.

As shown in FIG. 7, S710 is included.

In S710, UE capability information is sent to a base station.

In an embodiment, the UE can report the UE capability information to the base station through one of the following messages: UElnformation response, UE capability information, sidelink UE information NR and other messages; or, the core network can inform the base station of the UE capability information through one of the following messages: UE INFORMATION TRANSFER, UE CONTEXT MODIFICATION REQUEST; or, a UE can inform another UE of the UE capability information through one of the following messages: UECapabilitylnformationSidelink.

In an embodiment, these messages need to carry UE capability information, where the UE capability information about terminal aggregator includes one of the following: a supporting situation for TAC; a supporting situation for copy function based TAC; a supporting situation for distribution function based TAC; frequency point information supporting TAC; a communication node identification for TAC; a supporting situation for leading transmission based TAC; a supporting situation for assisted transmission based TAC; information of other communication node that jointly performs TAC.

In an embodiment, for the supporting situation for TAC can be understood as whether the UE supports terminal aggregator transmission. If the UE supports terminal aggregator transmission, the UE is indicated to support terminal aggregator transmission.

For the supporting situation for copy function based TAC, the supporting situation for copy function based TAC can be understood as whether the UE supports copy function based terminal aggregator transmission. If the UE supports copy function based terminal aggregator transmission, the UE is indicated to support copy function based terminal aggregator transmission.

For the supporting situation for distribution function based TAC, the supporting situation for distribution function based TAC can be understood as whether the UE supports distribution function based terminal aggregator transmission. If the UE supports distribution function based terminal aggregator transmission, the UE is indicated to support distribution function based terminal aggregator transmission.

For the frequency point information supporting TAC, the frequency point information supporting TAC can be understood as which frequency points the UE supports. If the UE supports terminal aggregator transmission, frequency point information supported by the UE.

For the communication node identification for TAC, the communication node identification for TAC can be understood as an identification of the UE. If the UE supports terminal aggregator transmission, an identification of the UE indicating for terminal aggregator is used to identify a unique UE.

For the supporting situation for leading transmission based TAC, the supporting situation for leading transmission based TAC can be understood as whether the UE supports leading transmission based terminal aggregator transmission. If the UE supports terminal aggregator transmission and supports a function of an anchor UE, such as the leading transmission in the terminal aggregator transmission, and supports a function of data generation and data final processing, the UE is indicated to support leading transmission based terminal aggregator transmission.

For the supporting situation for assisted transmission based TAC, the supporting situation for assisted transmission based TAC can be understood as whether the UE supports assisted transmission based terminal aggregator transmission. If the UE supports terminal aggregator transmission and supports a function of a non-anchor UE, such as the assisted transmission in terminal aggregator transmission, and supports a function of data forwarding and other functions, the UE is indicated to support assisted transmission based terminal aggregator transmission.

For the information of other communication node that jointly performs TAC can be understood as information of other UE that performs TAC together with the UE. If the UE supports terminal aggregator transmission, the UE capability can carry which UEs (e.g., a candidate non-anchor UE, a candidate anchor UE) can perform terminal aggregator transmission together, and the message can carry information of these UEs, for example, a UE identification, an identification of whether leading transmission based terminal aggregator transmission is supported, an identification of whether assisted transmission based terminal aggregator transmission is supported, etc.

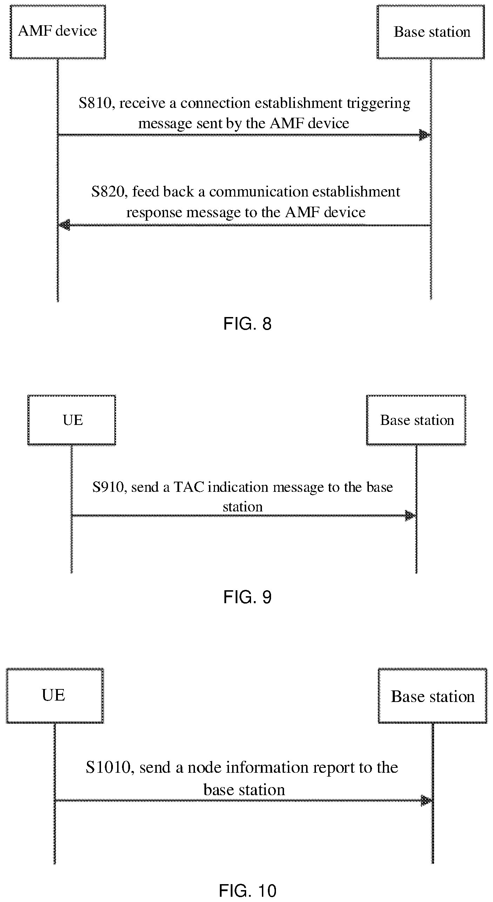

In an embodiment, taking the first communication node being a UE, the second communication node being a base station (denoted as a gNB), and the third communication node being an AMF device (i.e., the core network) as an example, a configuration process of initializing context is illustrated. FIG. 8 is a schematic diagram of an establishment of an initialized connection between an AMF device and a base station provided by the embodiments of the present disclosure. As shown in FIG. 8, S81 0-S820 are included.

In S810, a communication establishment request message sent by the AMF device is received.

In S820, a communication establishment response message is fed back to the AMF device.

In order to support terminal aggregator transmission, the core network can inform the base station of whether the UE supports terminal aggregator transmission during a process for establishing a traffic or UE establishing a connection, such that the base station can choose whether to configure terminal aggregator transmission for the UE.

The communication establishment request message for establishing a traffic or established by the UE sent by the core network to the base station (e.g., an initial context setup request, a PDU session resource setup request, a PDU session resource modify request, a PDU session resource modify indication, an ERAB setup request message or others messages) carries one of the following: indication information that the UE is authorized to support TAC; information of other UE that jointly performs TAC; UE capability information of other UE that jointly performs TAC; frequency point information supporting TAC; and traffic that supports TAC.

For the case of the indication information that UE is authorized to support TAC, if the UE is authorized to support terminal aggregator transmission, the communication establishment response message carries indication information indicating that the UE is authorized to support TAC, and the indication information indicates that the UE is authorized to support terminal aggregator transmission.

For the case of the information of other UE that jointly performs TAC, if the UE is authorized to support terminal aggregator transmission, the communication establishment request message carries which UEs (e.g., a non-anchor UE, a relay UE or a non-anchor UE) that can perform terminal aggregator transmission together, the communication establishment response message may carry identifications of these UEs, where identifications of these UEs are S-TMSI, or a target identification used to identify a unique UE when communicating between UEs, etc.

For the case of UE capability information of other UE that jointly performs TAC, the communication establishment request message may also carry the UE capability information of these UEs. These non-anchor UEs can be one UE or multiple UEs. If the communication establishment request message carries information of multiple UEs, the information of a UE may be a list, for example, a list of UE identifications and a list of UE capabilities.

For the case of frequency point information supporting TAC, if the UE is authorized to support terminal aggregator transmission, the communication establishment request message carries which frequency points can be used to support terminal aggregator transmission, etc.

For the case of a traffic that supports TAC, the communication establishment request message carries which traffics are authorized to support terminal aggregator transmission, for example, a packet data network (PDN) session or an E-UTRAN radio access bearer (ERAB), indicating whether it is authorized to support terminal aggregator transmission.

After the base station receives the communication establishment request message sent by the AMF device, the base station can feed back the communication establishment response message to the core network. For example, the communication establishment response message can be an INITIAL CONTEXT SETUP Response, a PDU session resource setup response, a PDU session resource modify response, a PDU session resource modify confirm, an ERAB setup request message or other messages. The communication establishment response message may carry an indication used to indicate whether the UE successfully establishes terminal aggregator transmission. A traffic identification (e.g., PDN session ID, ERAB ID) for successfully establishing terminal transmission can also be carried.

In an embodiment, taking the first communication node being a UE, the second communication node being a base station (denoted as a gNB), and the third communication node being an AMF device (i.e., the core network) as an example, the transmission process of the TAC indication message is illustrated. FIG. 9 is a schematic diagram of an interaction for transmitting a TAC indication message between a base station and a UE provided by the embodiments of the present disclosure. As shown in FIG. 9, S910 is included.

In S910, a TAC indication message is sent to the base station.

If the UE can support terminal aggregator transmission and meets a TAC triggering condition (See the description of the above embodiments), the UE can request the base station to configure a resource of the terminal aggregator transmission for the UE.

The UE may send the TAC indication message to the base station to inform the base station that the UE expects to support terminal aggregator transmission. The terminal aggregator transmission indication message, such as SidelinkUEinformationNR, UEAssistancelnformation or other messages, can carry at least one of the following parameters: an indication for expecting TAC; an indication for expecting leading transmission based TAC; an indication for expecting assisted transmission based TAC; an indication for expecting copy function based TAC; an indication for expecting distribution function based TAC; a reason for TAC or a reason for expecting TAC; a traffic identification for expecting TA.

In the case of indication for TAC (i.e., the indication for expecting terminal aggregator transmission), if the UE expects terminal aggregator transmission, an expectation for terminal aggregator transmission is indicated.

In the case of the indication for expecting leading transmission based TAC (i.e., the indication for expecting leading transmission based terminal aggregator transmission), if the UE expects the leading transmission based terminal aggregator transmission, an expectation for the leading transmission based terminal aggregator transmission is indicated.

In the case of the indication for expecting assisted transmission based TAC (i.e., the indication for expecting assisted transmission based terminal aggregator transmission), if the UE expects the assisted transmission based terminal aggregator transmission, an expectation for the assisted transmission based terminal aggregator transmission is indicated.

In the case of the indication for expecting copy function based TAC (i.e., the indication for expecting copy function based terminal aggregator transmission), if the UE expects the copy function based terminal aggregator transmission, an expectation for the copy function based terminal aggregator transmission is indicated.

In the case of the indication for expecting distribution function based TAC (i.e., the indication for expecting distribution function based terminal aggregator transmission), if the UE expects the distribution function based terminal aggregator transmission, an expectation for the distribution function based terminal aggregator transmission is indicated.

In the case of the traffic identification for expecting TAC (i.e., the traffic identification for expecting terminal aggregator transmission), if the UE expects a certain traffic (e.g., a DRB, a logical channel, a PDU session, an ERAB, etc.) to perform a terminal transmission, a traffic identification (e.g., a DRB ID, a logical channel ID, a PDU session ID, an ERAB ID, etc.) is indicated.

In the case of the reason for TAC or the reason for expecting TAC (i.e., the reason for terminal aggregator transmission, or the reason for expecting terminal aggregator transmission), the reason for TAC or the reason for expecting TAC can be, for example: a channel quality of the UE being lower than a certain channel quality threshold value, a traffic volume exceeding a certain traffic volume threshold value, which may refer to the description of the above embodiments and may not be repeated herein.

In an embodiment, taking the first communication node being a UE, the second communication node being a base station (denoted as a gNB), and the third communication node being an AMF device (i.e., the core network) as an example, a transmission process of a node information report is illustrated. FIG. 10 is a schematic diagram of an interaction for transmitting a node information report between a base station and a UE provided by the embodiments of the present disclosure. As shown in FIG. 10, S1010 is included.

In S1010, a node information report is sent to the base station.

The UE can initiate an establishment of a connection with other UE, such as establishing a WiFi connection, establishing a sidelink connection, etc. The anchor UE or non-anchor UE that establishes the connection is reported to the base station, such that the base station can support terminal aggregator function of the UE.

If the UE can support terminal aggregator transmission, the UE can report information of other UE to the base station, such as SidelinkUEinformationNR, UEAssistancelnformation or other messages, etc., and the information carries at least one of the following parameters: indication information of supporting TAC; TAC capability information of other UE; a UE identification; a measurement result of other UE; a measurement result for the UE to measure other UE; a distance between the UE and other UE.

For the case that the node information report carries indication information for indicating to support TAC, the indication information for supporting TAC is used to indicate that the UE supports terminal aggregator transmission.

The node information report carries the TAC capability information of other UE. In an embodiment, the node information report carries a capability for supporting terminal aggregator of a non-anchor UE and/or an anchor UE that establishes a terminal connection or a candidate non-anchor UE and/or anchor UE of the terminal aggregator transmission. The capability for supporting terminal aggregator may include: whether the UE supports terminal aggregator transmission, whether the UE supports copy function based terminal aggregator transmission, whether the UE supports distribution function based terminal aggregator transmission, frequency point information that the UE supports, etc., which refers to UE capabilities. A non-anchor UE can be one UE or multiple UEs. If the message carries information of multiple UEs, information of UE may be a list, for example, a list that UE supports a terminal aggregator capability.

The node information report may carry a UE identification. In an embodiment, the UE identification may be an S-TMSI, a target identification to identify a unique UE in communication between the UE and other UE, an RNTI, etc. The S-TMSI and the target identification can be bound to facilitate the base station to identify the non-anchor UE. A non-anchor UE can be one UE or multiple UEs. If the message carries information of multiple UEs, the information of UE may be a list, for example, a list of UE identifications.

The node information report can also carry a measurement result of other UE, for example: a measurement result obtained by measuring a downlink signal of the base station under the execution of other UE, including CQI, RSRP, RSRQ, etc. The measurement result obtained by measuring a downlink signal of the UE under the execution of other UE include CQI, RSRP, RSRQ, etc.

The node information report can also carry a measurement result for the UE to measure other peer UE, for example: a measurement result obtained by measuring a downlink signal measured by other peer UEs under the execution of the UE, including CQI, RSRP, RSRQ, etc.

The node information report may also carry a distance between the UE and other peer UE, such as a distance between a position of the UE and a position of a UE that establishes a connection with the UE, or a distance range, etc.

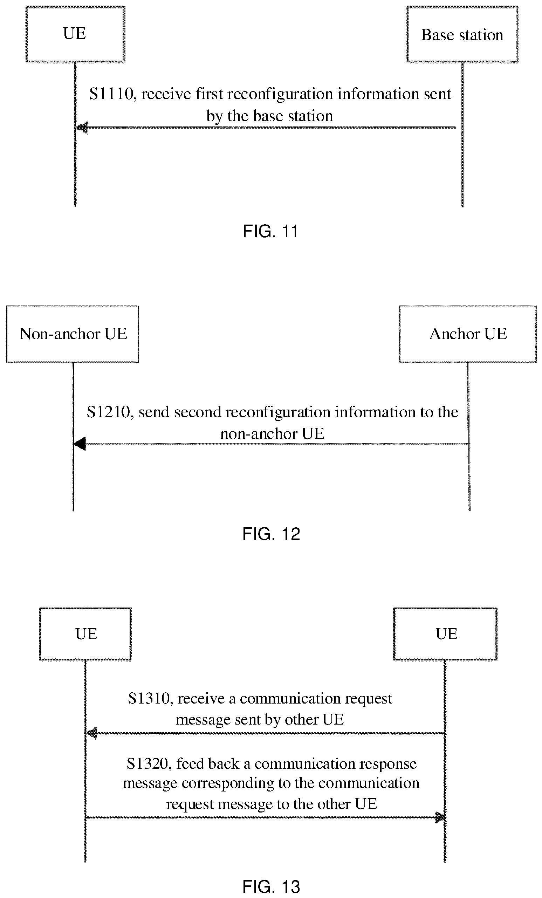

In an embodiment, taking the first communication node being a UE, the second communication node being a base station (denoted as a gNB), and the third communication node being an AMF device (i.e., the core network) as an example, the transmission process of first reconfiguration information is illustrated. FIG. 11 is a schematic diagram of an interaction of a reconfiguration between a base station and a UE provided by the embodiments of the present disclosure. For example, the first communication node is an anchor UE, and the other first communication node is a non-anchor UE. As shown in FIG. 11, S1110 is included.

In S1110, first reconfiguration information sent by the base station is received.

The base station determines that the terminal aggregator transmission is provided by a non-anchor UE for a certain traffic of an anchor UE, the base station needs to provide corresponding first reconfiguration information including at least one of the following.

Configuration 1: configuring an identification of the non-anchor UE for the anchor UE, so as to indicate which UEs support the terminal aggregator transmission. The identification of the non-anchor UE is an S-TMSI, a target identification to identify a unique UE in communication between UEs, or an RNTI, etc. For example, an S-TMSI of UE2 is configured for UE1.

Configuration 2: configuring a traffic identification for supporting terminal aggregator transmission for the anchor UE, so as to indicate which traffic of the UE supports terminal aggregator transmission. The traffic identification is a DRB ID, a PDU session ID, an ERAB ID, a logical channel ID, etc. For example, a DRB of the UE1 with a DRB ID of 1 configures an indication for supporting terminal aggregator transmission.

Configuration 3: configuring a deleted-traffic identification for supporting terminal aggregator transmission for the anchor UE, so as to indicate which traffic of the UE is deleted. The deleted-traffic identification is a DRB ID, a PDU session ID, an ERAB ID, a logical channel ID, etc.

Configuration 4: configure configuration information of a Uu interface corresponding to the anchor UE for the anchor UE, so as to indicate a radio interface configuration of the UE that supports terminal aggregator, the configuration information including: a certain DRB, a DRB ID, a PHY configuration, a MAC configuration, an RLC configuration, a PDCP configuration, a SDAP configuration, a logical channel identification, a logical channel configuration, etc. For example, a DRB of the UE1 with a DRB ID of 1 has a logical channel identification of 1.

Configuration 5: configuring a PDCP function for the anchor UE, so as to indicate whether the anchor UE supports a copy function or a distribution function. If the anchor UE supports the copy function, the PDCP function indicates the copy function.

Configuration 6: configuring configuration information of a connection between the anchor UE and the non-anchor UE for the anchor UE, the configuration information including: if a sidelink communication is used between the anchor UE and the non-anchor UE, the configuration includes: a certain sidelink DRB, a sidelink DRB ID, a sidelink PHY configuration, a sidelink MAC configuration, a sidelink RLC configuration, a sidelink logical channel identification, a sidelink logical channel configuration, etc. For example, a sidelink DRB with a sidelink DRB ID of 3 has a sidelink logical channel identification of 3.

Configuration 7: configuring an association of a DRB or PDCP of a Uu interface of the anchor UE, and a DRB or logical channel connected between the anchor UE and the non-anchor UE for the anchor UE. If a sidelink communication is adopted between the anchor UE and the non-anchor UE, the DRB or PDCP of the anchor UE at the Uu interface is associated with the sidelink DRB or logical channel. For example, a DRB with a DRB ID of 1 or a PDCP of the UE1 is associated with a sidelink DRB with a sidelink DRB ID of 3, or a DRB with a DRB ID of 1 or a PDCP of the UE1 is associated with a logical channel with a sidelink logical channel identification of 3.

Configuration 8: configuring an association of a DRB or PDCP of a Uu interface of the anchor UE, and a DRB or logical channel of the non-anchor UE for the anchor UE, that is, the DRB or PDCP of the anchor UE at the Uu interface is associated with the DRB or logical channel of the non-anchor UE. For example, a DRB with a DRB ID of 1 or a PDCP of the UE1 is associated with a DRB with a DRB ID of 2 of the UE2, or a DRB with a DRB ID of 1 or a PDCP of the UE1 is associated with a logical channel with a logical channel identification of 2 of the UE2.

Configuration 9: configuring an identification of the anchor UE for the non-anchor UE, so as to indicate which UEs support terminal aggregator transmission. The identification of the anchor UE is an S-TMSI, a target identification to identify a unique UE in communication between UEs, or an RNTI, etc. For example, an S-TMSI of the UE1 is configured for the UE2.

Configuration 10: configuring a traffic identification supporting terminal aggregator transmission for the non-anchor UE, so as to indicate which traffic of the UE supports terminal aggregator transmission, and the traffic identification is a DRB ID, etc. For example, a DRB with a DRB ID of 1 of the UE1 configures an indication that supports terminal aggregator transmission;

Configuration 11: configuring a deleted-traffic identification supporting terminal aggregator transmission for the non-anchor UE, so as to indicate which traffic of the UE is deleted. The deleted-traffic identification is a DRB ID, a PDU session ID, an ERAB ID, a logical channel ID, etc.

Configuration 12: configuring configuration information of the Uu interface corresponding to the non-anchor UE for the non-anchor UE, so as to indicate a radio interface configuration of the non-anchor UE that supports terminal aggregator, the configuration information including: a certain DRB, a DRB ID, a PHY configuration, a MAC configuration, an RLC configuration, a logical channel identification, a logical channel configuration, etc. For example, a DRB with a DRB ID of 2 of the UE2 has a logical channel identification of 2. The non-anchor UE lacks PDCP configuration and SDAP configuration in the configuration, and it can be known that the DRB or logical channel assists other UE to perform transmission.

Configuration 13: configuring configuration information of a connection between the anchor UE and the non-anchor UE for the anchor UE and the non-anchor UE, including: if sidelink communication is used between the anchor UE and the non-anchor UE, the configuration includes: a sidelink DRB, a sidelink DRB ID, a sidelink PHY configuration, a sidelink MAC configuration, a sidelink RLC configuration, a sidelink logical channel identification, a sidelink logical channel configuration, etc. For example, a sidelink DRB with a sidelink DRB ID of 3 has a sidelink logical channel identification of 3.

Configuration 14: configuring an association of a DRB or logical channel of the Uu interface of the non-anchor UE, and a DRB or logical channel between the anchor UE and the non-anchor UE for the non-anchor UE. If sidelink communication is adopted between the anchor UE and the non-anchor UE, the DRB or logical channel of the non-anchor UE at the Uu interface is associated with the sidelink DRB or logical channel. For example, a DRB with a DRB ID of 2 or a logical channel with a logical channel identification of 2 of the UE2 is associated with a sidelink DRB with a sidelink DRB ID of 3, or a DRB with a DRB ID of 2 or a logical channel with a logical channel identification of 2 of the UE2 is associated with a logical channel with a sidelink logical channel identification of 3.

Configuration 15: configuring an association of a DRB or PDCP of the Uu interface of the non-anchor UE, and a DRB or logical channel of the non-anchor UE for the non-anchor UE, a DRB or PDCP of the anchor UE at the Uu interface is associated with a DRB or logical channel of the non-anchor UE. For example, a DRB with a DRB ID of 1 or a PDCP of the UE1 is associated with a DRB with a DRB ID of 2 of the UE2, or a DRB with a DRB ID of 1 or a PDCP of the UE1 is associated with a logical channel with a logical channel identification of 2 of the UE2.

The above configurations can be partially or completely included in an RRC message (e.g., an RRCReconfiguration message), and the configuration information for the non-anchor UE (which is described in the configuration 9-15, etc.) can be encapsulated as an RRC message (e.g., an RRCReconfiguration message, a RRCReconfigurationSidelink or other messages), which is carried in the RRC message sent to the anchor UE. After the anchor UE receives the message, the message is decapsulated, and then the RRC message or configuration sent to the non-anchor UE is forwarded to the non-anchor UE.

The configuration information for the anchor UE (which is described in configurations 1 to 8, etc.) can be encapsulated as an RRC message (e.g., an RRCReconfiguration, an RRCReconfigurationSidelink or other messages), which is carried in the RRC message sent to the non-anchor UE. After the non-anchor UE receives the message, the message is decapsulated, and then the RRC message or configuration sent to the anchor UE is forwarded to the non-anchor UE.

As mentioned above, the non-anchor UE can be one UE or multiple UEs. The RRC message can include configurations of multiple UEs, for example, the RRC message can include a configuration list, and each information element (IE) corresponds to a configuration of a UE, and a configuration of each UE can be encapsulated, for example, the configuration of each UE can be encapsulated as an RRC message. Configurations of multiple UEs correspond to multiple RRC messages, which are carried in the RRC message as an RRC message list.

In an embodiment, taking the first communication node being an anchor UE, the other first communication node being a non-anchor UE, the second communication node being a base station (denoted as a gNB), and the third communication node being an AMF device (i.e., the core network) as an example, the transmission process of second reconfiguration information is illustrated. FIG. 12 is a schematic diagram of an interaction of a reconfiguration among UEs provided by the embodiments of the present disclosure. As shown in FIG. 12, S1210 is included.

In S1210, second reconfiguration information is sent to the non-anchor UE.

If sidelink communication is supported between the anchor UE and non-anchor UE, the anchor UE provides the non-anchor UE with at least one of the following corresponding configurations.

Configuration 1: configuring an identification of the anchor UE for the non-anchor UE, so as to indicate which UEs support terminal aggregator transmission. The identification of the anchor UE is an S-TMSI, a target identification to identify a unique UE in communication between UEs, or an RNTI, etc. For example, an S-TMSI of the UE1 is configured for the UE2.

Configuration 2: configuring a traffic identification supporting terminal aggregator transmission for the non-anchor UE, so as to indicate which traffic of the UE supports terminal aggregator transmission. The traffic identification is a DRB ID, etc. For example, a DRB with a DRB ID of 1 of the UE1 configures an indication that supports terminal aggregator transmission;

Configuration 3: configuring a deleted-traffic identification supporting terminal aggregator transmission for the non-anchor UE, so as to indicate which traffic of the UE is deleted. The deleted-traffic identification is a DRB ID, a PDU session ID, an ERAB ID, a logical channel ID, etc.

Configuration 4: configuring configuration information of the Uu interface corresponding to the non-anchor UE for the non-anchor UE, so as to indicate a radio interface configuration of the non-anchor UE that supports terminal aggregator, the configuration information including: a certain DRB, a DRB ID, a PHY configuration, a MAC configuration, a RLC configuration, a logical channel identification, a logical channel configuration, etc. For example, a DRB with a DRB ID of 2 of the UE2 has a logical channel identification of 2. The non-anchor UE lacks PDCP configuration and SDAP configuration in the configuration, and it can be known that the DRB or logical channel assists other UE to perform transmission.

Configuration 5: configuring configuration information of a connection between the anchor UE and the non-anchor UE for the anchor UE and the non-anchor UE, including: if sidelink communication is used between the anchor UE and the non-anchor UE, the configuration includes: a sidelink DRB, a sidelink DRB ID, a sidelink PHY configuration, a sidelink MAC configuration, a sidelink RLC configuration, a sidelink logical channel identification, a sidelink logical channel configuration, etc. For example, a sidelink DRB with a sidelink DRB ID of 3 has a sidelink logical channel identification of 3.

Configuration 6: configuring an association of a DRB or logical channel of the Uu interface of the non-anchor UE, and a DRB or logical channel between the anchor UE and the non-anchor UE for the non-anchor UE. If sidelink communication is adopted between the anchor UE and the non-anchor UE, the DRB or logical channel of the non-anchor UE at the Uu interface is associated with the sidelink DRB or logical channel. For example, a DRB with a DRB ID of 2 or a logical channel with a logical channel identification of 2 of the UE2 is associated with a sidelink DRB with a sidelink DRB ID of 3, or a DRB with a DRB ID of 2 or a logical channel with a logical channel identification of 2 of the UE2 is associated with a logical channel with a sidelink logical channel identification of 3.

Configuration 7: configuring an association of a DRB or PDCP of the Uu interface of the non-anchor UE, and a DRB or logical channel of the non-anchor UE for the non-anchor UE, a DRB or PDCP of the anchor UE at the Uu interface is associated with a DRB or logical channel of the non-anchor UE. For example, a DRB with a DRB ID of 1 or a PDCP of the UE1 is associated with a DRB with a DRB ID of 2 of the UE2, or a DRB with a DRB ID of 1 or a PDCP of the UE1 is associated with a logical channel with a logical channel identification of 2 of the UE2.

It should be noted that each configuration (i.e., configuration 1 to configuration 7) included in the second reconfiguration information is as the same as configuration 9 to configuration 15 in the first reconfiguration information of the above embodiments.

Each configuration in the second reconfiguration information can be partially or completely included in an RRC message (e.g., RRCReconfigurationSidelink or other messages), where the configuration of the Uu interface of the non-anchor UE (e.g., configurations 2-4, etc.) can be encapsulated as a container, and can be carried in the RRC message as an RRC message (e.g., an RRCReconfiguration or other messages).

In an embodiment, if sidelink communication is supported between the anchor UE and the non-anchor UE, the non-anchor UE provides third reconfiguration information to the anchor UE, where the third reconfiguration information includes at least one of the following information.

Configuration 1: configuring an identification of the non-anchor UE for the anchor UE, so as to indicate which UEs support terminal aggregator transmission. The identification of the non-anchor UE is an S-TMSI, a target identification to identify a unique UE in communication between UEs, or an RNTI, etc. For example, an S-TMSI of UE2 is configured for UE1.

Configuration 2: configuring a traffic identification supporting terminal aggregator transmission for the anchor UE, so as to indicate which traffic of the UE supports terminal aggregator transmission. The traffic identification is a DRB ID, a PDU session ID, an ERAB ID, a logical channel ID, etc. For example, a DRB of the UE1 with a DRB ID of 1 configures an indication for supporting terminal aggregator transmission.

Configuration 3: configuring a deleted-traffic identification supporting terminal aggregator transmission for the anchor UE, so as to indicate which traffic of the UE is deleted. The deleted-traffic identification is a DRB ID, a PDU session ID, an ERAB ID, a logical channel ID, etc.

Configuration 4: configuring configuration information of an interface corresponding to the anchor UE for the anchor UE, so as to indicate a radio interface configuration of the UE that supports terminal aggregator, the configuration information including: a certain DRB, a DRB ID, a PHY configuration, a MAC configuration, a RLC configuration, a PDCP configuration, a SDAP configuration, a logical channel identification, a logical channel configuration, etc. For example, a DRB of the UE1 with a DRB ID of 1 has a logical channel identification of 1.

Configuration 5: configuring a PDCP function for the anchor UE, so as to indicate whether the anchor UE supports a copy function or a distribution function. If the anchor UE supports the copy function, the PDCP function indicates the copy function.

Configuration 6: configuring configuration information of a connection between the anchor UE and the non-anchor UE for the anchor UE, the configuration information including: if a sidelink communication is adopted between the anchor UE and the non-anchor UE, the configuration includes: a sidelink DRB, a sidelink DRB ID, a sidelink PHY configuration, a sidelink MAC configuration, a sidelink RLC configuration, a sidelink logical channel identification, a sidelink logical channel configuration, etc. For example, a sidelink DRB with a sidelink DRB ID of 3 has a sidelink logical channel identification of 3.

Configuration 7: configuring an association of a DRB or PDCP of a Uu interface of the anchor UE, and a DRB or logical channel connected between the anchor UE and the non-anchor UE for the anchor UE. If a sidelink communication is adopted between the anchor UE and the non-anchor UE, the DRB or PDCP of the anchor UE at the Uu interface is associated with the sidelink DRB or logical channel. For example, a DRB with a DRB ID of 1 or a PDCP of the UE1 is associated with a sidelink DRB with a sidelink DRB ID of 3, or a DRB with a DRB ID of 1 or a PDCP of the UE1 is associated with a logical channel with a sidelink logical channel identification of 3.

Configuration 8: configuring an association of a DRB or PDCP of a Uu interface of the anchor UE, and a DRB or logical channel of the non-anchor UE for the anchor UE, that is, the DRB or PDCP of the anchor UE at the Uu interface is associated with the DRB or logical channel of the non-anchor UE. For example, a DRB with a DRB ID of 1 or a PDCP of the UE1 is associated with a DRB with a DRB ID of 2 of the UE2, or a DRB with a DRB ID of 1 or a PDCP of the UE1 is associated with a logical channel with a logical channel identification of 2 of the UE2.

In an embodiment, configurations in the third reconfiguration information may be partially or completely included in an RRC message (e.g., an RRC Reconfiguration sidelink or other messages), where configuration for the Uu interface of the anchor UE (e.g., configurations 2-5, etc.) can be encapsulated as a container, and can be carried in the RRC message as an RRC message (e.g., an RRC Reconfiguration or other messages).

In an embodiment, taking the first communication node being a UE, the second communication node being a base station (denoted as a gNB), and the third communication node being an AMF device (i.e., the core network) as an example, the transmission process of communication request message is illustrated. FIG. 13 is a schematic diagram of an interaction of a communication request between UEs provided by the embodiments of the present disclosure. As shown in FIG. 13, when a connection between UEs is established, a terminal aggregator based terminal connection being established is needed to be indicated. If sidelink communication is supported between UEs, the communication request message carries information about terminal aggregator. When the UE is an anchor UE, the another UE is a non-anchor UE. Correspondingly, when the UE is a non-anchor UE, the another UE is an anchor UE.

In S1310, a communication request message sent by other UE is received.

The communication request message may be a direct communication request, a direct link establishment request, a direct link modification request, etc.

In an embodiment, the communication request message may carry: a message for expecting TAC; a message for the UE to expect copy function based TAC, a message for the UE to expect distribution function based TAC; a message for the UE to expect the TAC, support assisted transmission and support a data forwarding function; an identification of the UE; a QoS parameter of the TAC; a cell identification or a base station identification corresponding to the UE.

In an embodiment, if the UE expects terminal aggregator transmission, an establishment of a terminal aggregator transmission based terminal connection is indicated; if the UE expects copy function based terminal aggregator transmission, an establishment of the copy function based terminal aggregator transmission is indicated; if the UE expects copy function based terminal aggregator transmission, an establishment of the distribution function based terminal aggregator transmission is indicated; if the UE expects to support terminal aggregator transmission, supports a function of controlling data generation and data processing, an establishment of the leading transmission based terminal aggregator transmission is indicated; if the UE supports terminal aggregator transmission, and supports assisted transmission, data forwarding and other functions, an establishment of assisted transmission based terminal aggregator transmission is indicated; an identification of the UE, such as an S-TMSI, an RNTI, etc. The QoS parameter of the terminal aggregator transmission, such as a PC5 5G QoS identifier (POI), a guaranteed flow bit rate (GFBR), etc.; a cell identification or a base station identification selected by the UE.

In S1320, a communication response message corresponding to the communication request message is fed back to the other UE.

In an embodiment, the other UE replies to the UE with the communication response message, where the communication response message may be: a direct communication accept, a direct link establishment accept, a direct link modification request, etc., and the communication response message carries: an identification of the UE; a QoS parameter of the TAC; a cell identification or base station identification corresponding to the UE. In an embodiment, the identification of the UE may be an S-TMSI, an RNTI, etc.; a QoS parameter of the terminal aggregator transmission may be a PQI, a GFBR, etc.; a cell identification or a base station identification selected by the UE.

In the third embodiment, taking the first communication node being a local UE, the other first communication node as being a peer UE, and the second communication node being a base station (denoted as a gNB) as an example, the process of an interaction of a connection confirmation message among the local UE, the peer UE, and the gNB is illustrated. It should be noted that, before the local UE performs terminal aggregator transmission (i.e., forwarding a data packet to the peer UE (e.g., a non-anchor UE, an anchor UE)), the local UE must ensure that a connection between the local UE and the peer UE is established successfully, and a connection between a Uu interface of the peer UE and the base station is established successfully. After these operations are completed, the local UE sends data to the peer UE. Otherwise, the local UE may not be able to successfully forward the data, or the peer UE may not be able to successfully forward the data, thereby resulting in data loss.

Similarly, the base station not only needs to know that the Uu interfaces of the local UE and the peer UE are connected successfully, but also needs to know that the connection between the local UE and the peer UE is successfully established.

During an establishment process of terminal aggregator transmission, both the local UE and the base station need to receive a connection confirmation message. For example, the process of an interaction of the connection confirmation message among the local UE, the peer UE, and the base station includes the following three examples.

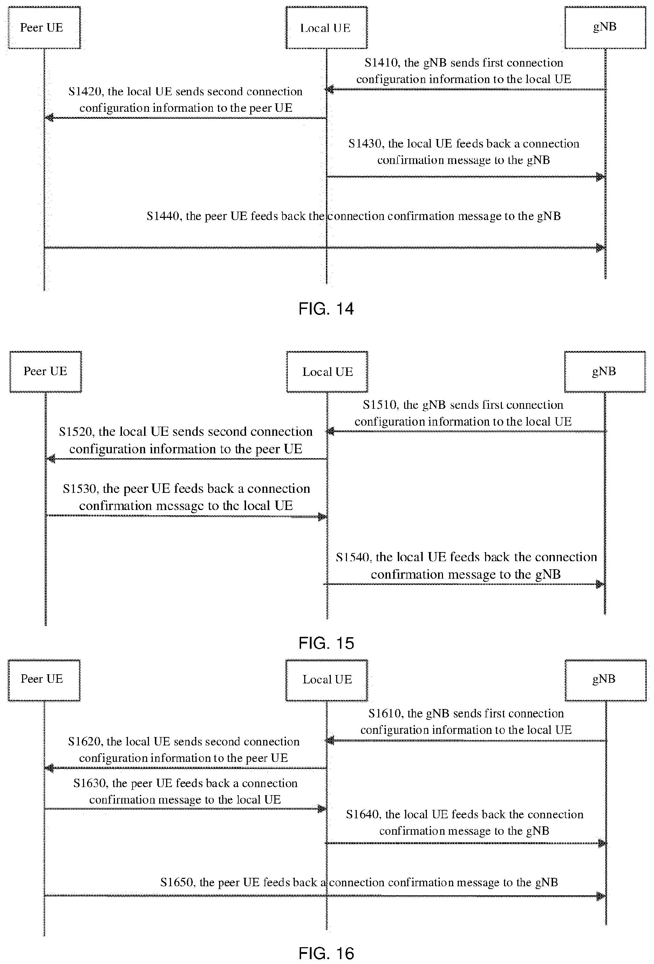

Example 1: FIG. 14 is a schematic diagram of an interaction of a connection confirmation message provided by the embodiments of the present disclosure. As shown in FIG. 14, the following steps are included.

In S1410, the gNB sends first connection configuration information to the local UE.

In an embodiment, the base station sends the first connection configuration information to the local UE (e.g., an anchor UE or a non-anchor UE). For example, the first connection configuration information may be a message such as an RRC Reconfiguration. The message carries configuration information. The configuration information indicates which traffics support terminal aggregator. For example, a certain DRB indicates that terminal aggregator is supported, or a certain DRB can be associated with a DRB configuration between the base station and the local UE, and can also be associated with a DRB between the base station and the peer UE, and can also be associated with a configuration between the local UE and the peer UEs. The configuration information refers to reconfiguration information described in the above embodiments.

In S1420, the local UE sends second connection configuration information to a peer UE.

In an embodiment, the local UE sends the second connection configuration information to the peer UE (e.g., a non-anchor UE or an anchor UE). For example, the second connection configuration information can be a message such as an RRC Reconfiguration Sidelink, and the message carries configuration information. The configuration information indicates which traffics support terminal aggregator. For example, a certain DRB indicates that terminal aggregator is supported, or a certain DRB can not only be associated with a DRB between the base station and the peer UE, but also associated with a configuration between the UE and the peer UE. The configuration information refers the reconfiguration information described in the above embodiments.

In S1430, the local UE feeds back connection confirmation message to the gNB.

In an embodiment, the local UE feeds back the connection confirmation message to the base station. When the local UE successfully establishes a connection between the local UE and the base station, or successfully establishes a connection between the peer UE and the local UE, the local UE feeds back a confirmation success message to the base station, for example: a message such as RRCReconfigurationComplete, or other messages. After the confirmation success message is received, it is considered that the connection between the local UE and the base station is successfully established, and it may also be considered that the connection between the peer UE and the local UE is successfully established.

In S1440, the peer UE feeds back the connection confirmation message to the gNB.

In an embodiment, the peer UE feeds back the connection confirmation message to the base station. When the peer UE successfully establishes a connection between the peer UE and the base station, or successfully establishes a connection between the peer UE and the local UE, the peer UE feeds back a confirmation success message to the base station, for example: a message such as RRCReconfigurationComplete, or other messages. After the confirmation success message is received, it is considered that the connection between the peer UE and the base station is successfully established, or it may also be considered the connection between the peer UE and the local UE is successfully established.

The message may carry some encapsulated RRC messages, and is a confirmation feedback message from a peer UE to confirm a connection between the peer UE and the local UE, for example: a message such as a RRCReconfigurationCompleteSidelink, or other messages. It should be noted that an execution order between S1430 and S1440 is not limited, that is, S1440 can be performed before S1430.

Example 2: FIG. 15 is another schematic diagram of an interaction of a connection confirmation message provided by the embodiments of the present disclosure. As shown in FIG. 15, the following steps are included.

In S1510, the gNB sends first connection configuration information to the local UE.

In an embodiment, the base station sends the first connection configuration information to the local UE (e.g., an anchor UE or a non-anchor UE). For example, the first connection configuration information may be a message such as RRC Reconfiguration. The message carries configuration information. The configuration information indicates which traffics support terminal aggregator. For example, a certain DRB indicates that the terminal aggregator is supported, or a certain DRB can be associated with a DRB configuration between the base station and the local UE, can also be associated with a DRB between the base station and the peer UE, and can further be associated with a configuration between the local UE and the peer UE. The configuration information refers to the reconfiguration information described in the above embodiments.

In S1520, the local UE sends second connection configuration information to the peer UE.

In an embodiment, the local UE sends the second connection configuration information to the peer UE (e.g., a non-anchor UE or an anchor UE). For example, the second connection configuration information can be a message such as RRC Reconfiguration Sidelink, and the message carries configuration information. The configuration information indicates which traffics support terminal aggregator. For example, a certain DRB indicates that terminal aggregator is supported, or a certain DRB can not only be associated with a DRB between the base station and the peer UE, but also associated with a configuration between the local UE and the peer UE. The configuration information refers to the reconfiguration information described in the above embodiments.

In S1530, the peer UE feeds back the connection confirmation message to the local UE.

In an embodiment, the peer UE feeds back the connection confirmation message to the local UE. When the peer UE successfully establishes a connection between the peer UE and the base station, or successfully establishes a connection between the peer UE and the local UE, the peer UE feeds back a confirmation success message to the local UE, for example: a message such as RRCReconfigurationCompleteSidelink, or other messages. After the confirmation success message is received, it is considered that the connection between the local UE and the base station is successfully established, and it may also be considered that the connection between the peer UE and the local UE is successfully established.

In S1540, the local UE feeds back the connection confirmation message to the gNB.

In an embodiment, the local UE feeds back the connection confirmation message to the base station. When the local UE successfully establishes a connection between the local UE and the base station, or successfully establishes a connection between the peer UE and the local UE, the local UE feeds back a confirmation success message to the base station, for example: a message such as RRCReconfigurationComplete, or other messages. After the confirmation success message is received, it is considered that the connection between the local UE and the base station is successfully established, and it may also be considered that the connection between the peer UE and the local UE is successfully established. The message may also carry an identification of the peer UE that fails to establish a connection, and a failure reason such as: a failure of a connection between UEs, a failure of a connection between the peer UE and the base station, a deterioration of UE channel quality, etc.

The message can also carry a confirmation message fed back by the peer UE, such as RRCReconfigurationCompleteSidelink, etc. The message can be encapsulated and carried by a message. It should be noted that an execution order of S1530 and S1540 is not limited, that is, S1540 can be performed before S1530.

Example 3: FIG. 16 is yet another schematic diagram of an interaction of a connection confirmation message provided by the embodiments of the present disclosure. As shown in FIG. 16, the following steps are included.

In S1610, the gNB sends first connection configuration information to the local UE.

In an embodiment, the base station sends the first connection configuration information to the local UE (e.g., an anchor UE or a non-anchor UE). For example, the first connection configuration information can be a message such as RRC Reconfiguration. The message carries configuration information. The configuration information indicates which traffics support terminal aggregator. For example, a certain DRB indicates that terminal aggregator is supported, or a certain DRB can be associated with a DRB configuration between the base station and the local UE, can also be associated with a DRB between the base station and the peer UE, and can further be associated with a configuration between the local UE and the peer UE. The configuration information refers to the reconfiguration information described in the above embodiments.

In S1620, the local UE sends second connection configuration information to the peer UE.

In an embodiment, the local UE sends the second connection configuration information to the peer UE (e.g., a non-anchor UE or an anchor UE). For example, the second connection configuration information can be a message such as an RRC Reconfiguration Sidelink, and the message carries configuration information. The configuration information indicates which traffics support terminal aggregator. For example, a certain DRB indicates that terminal aggregator is supported, or a certain DRB can not only be associated with a DRB between the base station and the peer UE, but also associated with a configuration between the UE and the peer UE. The configuration information refers to the reconfiguration information described in the above embodiments.

In S1630, the peer UE feeds back a connection confirmation message to the local UE.

In an embodiment, the peer UE feeds back the connection confirmation message to the local UE. When the peer UE successfully establishes a connection between the peer UE and the base station, or successfully establishes a connection between the peer UE and the local UE, the peer UE feeds back a confirmation success message to the local UE, for example: a message such as RRCReconfigurationCompleteSidelink, or other messages. After the confirmation success message is received, it is considered that the connection between the peer UE and the local UE is successfully established.

In S1640, the local UE feeds back the connection confirmation message to the gNB.

In an embodiment, the local UE feeds back the connection confirmation message to the base station. When the local UE successfully establishes a connection between the local UE and the base station, or successfully establishes a connection between the peer UE and the local UE, the local UE feeds back a confirmation success message to the base station, for example: a message such as RRCReconfigurationComplete, or other messages. After the confirmation success message is received, it is considered that the connection between the local UE and the base station is successfully established, and it may also be considered that the connection between the peer UE and the local UE is successfully established.

In S1650, the peer UE feeds back a connection confirmation message to the gNB.

In an embodiment, the peer UE feeds back the connection confirmation message to the base station. When the peer UE successfully establishes a connection between the peer UE and the base station, or successfully establishes a connection between the peer UE and the local UE, the peer UE feed back a confirmation success message to the base station, for example: a message such as RRCReconfigurationComplete, or other messages. After the confirmation success message is received, it is considered that the connection between the peer UE and the base station is successfully established, or it may also be considered the connection between the peer UE and the local UE is successfully established.

The message can also carry a confirmation message fed back by the peer UE, such as RRCReconfigurationCompleteSidelink, etc. The message can be encapsulated and carried by a message. It should be noted that an execution order of S1630 and S1650 is not limited.

In the fourth embodiment, after the configuration of the base station is completed, the UE needs to ensure that various connections (e.g., a connection between the anchor UE and the base station, a connection between the non-anchor UE and the base station, and a connection between the anchor UE and the non-anchor UE) is successful, and then, starts terminal aggregator transmission. Otherwise, a situation of data packet loss may occur. It can be understood that, before the UE starts terminal aggregator transmission, a starting transmission triggering message sent by the second communication node is received.

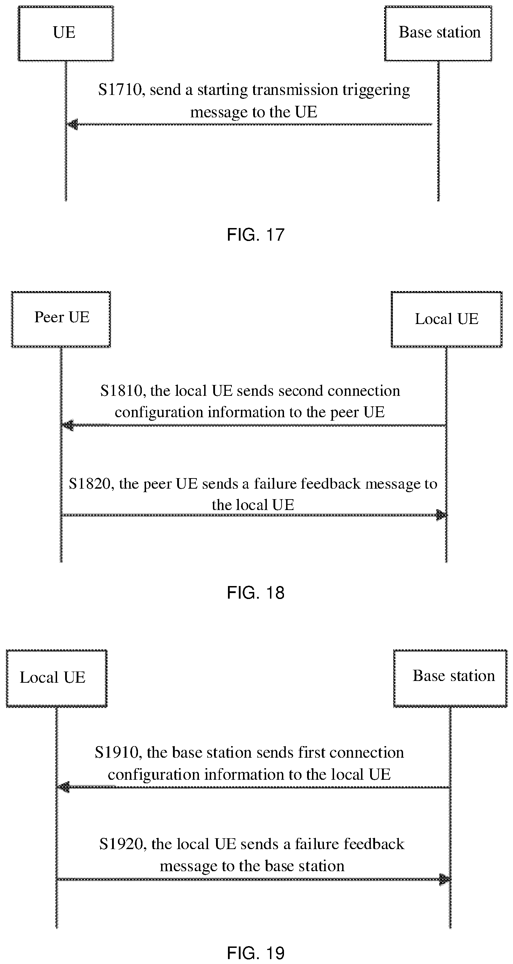

FIG. 17 is a schematic diagram of an interaction of a starting transmission triggering message provided by the embodiments of the present disclosure. Exemplarily, taking the first communication node being a UE and the second communication node being a gNB, a transmission process of the starting transmission triggering message is illustrated. As shown in FIG. 17, an interaction process of the starting transmission triggering message between the UE and gNB in an embodiment includes the following steps.

In S1710, a starting transmission triggering message is sent to the UE.

In an embodiment, the base station sends the starting transmission triggering message to the UE, or informs the UE of the starting transmission triggering message through an MAC CE message. For a traffic that supports terminal aggregator, if a connection between other UE and the base station is successfully established, the UE can send a signal of the traffic to the other UE or receive a signal of the traffic from the other UE.

The message may be an RRC message, such as an RRCReconfigurationComplete, etc. The message may also carry an identifier bit for representing that terminal aggregator is successfully established, a DRB identification that terminal aggregator is supported, or an identification of a UE that successfully establishes a terminal aggregator traffic (e.g., an RNTI, a target identification, etc.). The MAC CE can carry an identifier for representing that the terminal aggregator traffic is successfully established or a transmission is started.

In an embodiment, after the UE completes the configuration, a confirmation message is fed back. The UE may start the terminal aggregator transmission after a period of time after the confirmation message is fed back.

For the anchor UE, after the confirmation message (such as a message of RRC Reconfiguration Complete, etc.) is fed back, the UE starts a timer. When the timer expires, the UE starts terminal aggregator transmission, and sends data to the non-anchor UE, or receives data from the non-anchor UE. During a start-up period of the timer, if the UE receives a failure indication (which refers the description of the fifth embodiment), the UE stops the timer. During a start-up period of the timer, if the UE receives a scheduling indication (e.g., a physical downlink control channel (PDCCH)) from the base station, or a scheduling indication (e.g., PDCCH) for an operator that supports terminal aggregator transmission, the UE considers that the timer expires.

For the non-anchor UE, when the confirmation message (e.g., RRCReconfigurationComplete, RRCReconfigurationCompleteSidelink and other messages, etc.) is fed back, the UE starts the timer. When the timer expires, the UE starts terminal aggregator transmission, and sends data to the anchor UE or receives data from the anchor UE. During a start-up period of the timer, if the UE receives a failure indication (which refers to descriptions of the fifth embodiment), the UE stops the timer. During a start-up period of the timer, if the UE receives a scheduling indication (e.g., a physical downlink control channel (PDCCH)) from the base station, or a scheduling indication (e.g., PDCCH) for an operator that supports terminal aggregator transmission, the UE considers that the timer expires.

In the fifth embodiment, during the process of establishing a connection as described in the third embodiment above, a failure to establish a connection may occur, for example: a connection between the non-anchor UE and the anchor UE fails, a connection between the non-anchor UE and the base station fails, or the like. In an embodiment, the interaction process of a failure feedback message among the local UE, the peer UE and the gNB includes the following examples.

### Example 1:

FIG. 18 is a schematic diagram of an interaction of a failure feedback message between a local UE and a peer UE provided by the embodiments of the present disclosure. As shown in FIG. 18, an interaction process of the failure feedback message in an embodiment includes S1810-S1820.

In S1810, the local UE sends second connection configuration information to the peer UE.

The explanation of the second connection configuration information refers to the description in above embodiments, which is not repeated herein.

In S1820, the peer UE sends a failure feedback message to the local UE.

In an embodiment, when the peer UE fails to establish a connection between the peer UE and the local UE, or a connection between the peer UE and the base station, the peer UE applies a configuration before the peer UE sends the configuration message, and the peer UE sends the failure feedback message to the local UE. For example, the failure feedback message can be an RRCReconfigurationFailureSidelink, or other messages. After the local UE receives the failure feedback message, it is considered that the connection between the peer UE and the local UE fails, or the connection between the peer UE and the base station fails. The failure message (also referred to as failure feedback message) may carry a failure indication to indicate that the connection between the peer UE and the local UE fails, or the connection between the peer UE and the base station fails. A failure reason can also be carried, for example, the failure reason may be an encryption failure, a poor channel quality, etc.

### Example 2:

FIG. 19 is a schematic diagram of an interaction of a failure feedback message between a local UE and a base station provided by the embodiments of the present disclosure. For example, the local UE may be an anchor UE. As shown in FIG. 19, an interaction process of the failure feedback message in an embodiment includes S1910-S1920.

In S1910, the base station sends first connection configuration information to the local UE.

The explanation of the first connection configuration information refers to the description in above embodiments, which is not repeated herein.

In S1920, the local UE sends a failure feedback message to the base station.

In an embodiment, when the local UE fails to establish a connection between the local UE and the base station, or fails to establish a connection between the peer UE and the local UE, or the peer UE fails to establish a connection between the peer UE and the base station, the local UE applies a configuration before the base station sending a configuration message to the UE, the local UE can also apply a successful portion of a configuration (e.g., a configuration associated with the local UE and the peer UE that successfully establishes), and a failed portion of a configuration (e.g., a configuration associated with the local UE and the peer UE that fails ) can apply a configuration before the base station sends a configuration message to the local UE. The local UE sends a failure feedback message (for example: RRCReconfigurationFailure, or other messages) to the base station. After the base station receives the failure feedback message, it is considered that a connection between the peer UE and the local UE fails, or a connection between the peer UE and the base station fails, or a connection between the local UE and the base station fails. The failure message may carry a failure indication, so as to indicate that the connection between the peer UE and the local UE fails, or the connection between the peer UE and the base station fails, or the connection between the local UE and the base station fails. A failure reason can also be carried, for example, the failure reason may be an encryption failure, a poor channel quality, etc. An identification of a peer UE that fails to establish a connection (e.g., an RNTI, or a target identification) can also be carried.

The peer UE sends the failure feedback message (e.g., an RRC Reconfiguration Failure SideLink or RRC Reconfiguration Failure, etc.) to the local UE, and the failure feedback message may be encapsulated as a message, and be carried by the failure message fed back by the UE to the base station.

### Example 3:

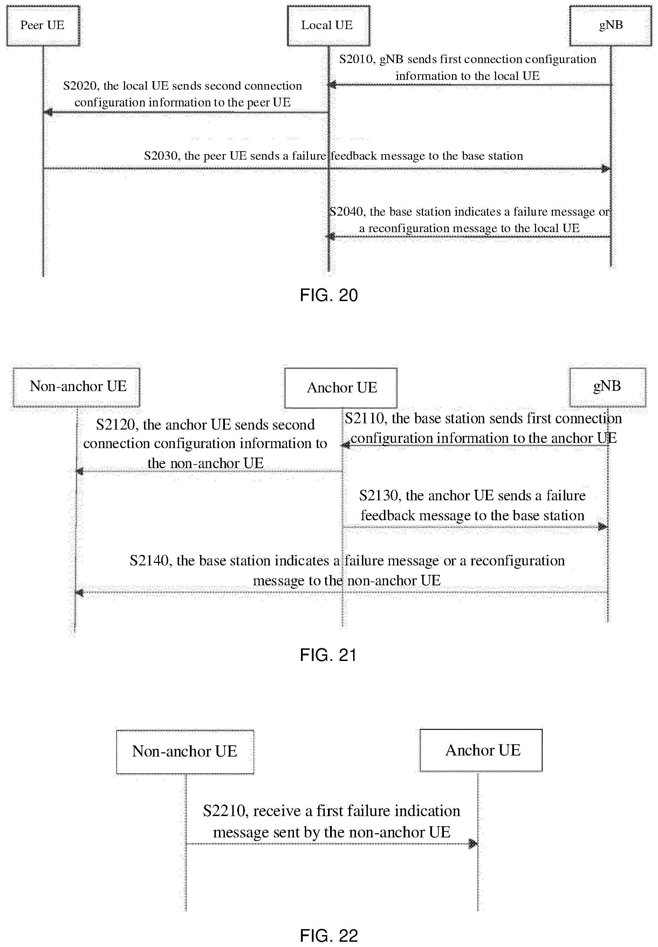

FIG. 20 is a schematic diagram of an interaction of a failure feedback message among a local UE, a peer UE, and a base station provided by the embodiments of the present disclosure. As shown in FIG. 20, an interaction process of the failure feedback message in an embodiment includes S2010-S2040.

In S2010, the base station sends first connection configuration information to the local UE.

The explanation of the first connection configuration information refers to the description in above embodiments, which is not repeated herein.

In S2020, the local UE sends second connection configuration information to the peer UE.

The explanation of the second connection configuration information refers to the description in above embodiments, which is not repeated herein.

In S2030, the peer UE sends a failure feedback message to the base station.

In an embodiment, when the peer UE fails to establish a connection between the peer UE and the local UE, or fails to establish a connection between the peer UE and the base station, the peer UE applies a configuration before a configuration message sent by the local UE to the peer UE is received, the peer UE sends the failure feedback message (e.g., RRCReconfigurationFailureSidelink or RRCReconfigurationFailure, etc.) to the base station. After the base station receives the failure feedback message, it is considered that the connection between the peer UE and the local UE fails, or the connection between the peer UE and the base station fails. The failure message may carry a failure indication to indicate that the connection between the peer UE and the local UE fails, or the connection between the peer UE and the base station fails. A failure reason can also be carried, for example, the failure reason may be an encryption failure, a poor channel quality, etc.

In S2040, the base station indicates a failure message or a reconfiguration message to the local UE.

In an embodiment, the base station indicates a failure message (e.g., RRCReconfigurationFailureSidelink or RRCReconfigurationFailure, etc.) to the local UE. After the local UE receives the failure message, it is considered that a connection between the peer UE and the local UE fails, or a connection between the peer UE and the base station fails, or a connection between the local UE and the base station fails. The failure message may carry a failure indication to indicate that the connection between the peer UE and the local UE fails, or the connection between the peer UE and the base station fails, or the connection between the local UE and the base station fails. A failure reason can also be carried, for example, the failure reason may be an encryption failure, a poor channel quality, etc. An identification of a peer UE that fails to establish a connection (e.g., an RNTI, or a target identification) can also be carried.

The peer UE sends a failure feedback message (e.g., RRCReconfigurationFailureSidelink or RRCReconfigurationFailure, etc.) to the base station. The failure feedback message can also be encapsulated as a message and carried by the failure message indicated by the base station to the local UE. After the local UE receives the failure feedback message, the local UE applies a configuration before the base station sends a configuration message to the local UE, and can also apply a successful portion of a configuration (e.g., a configuration associated with the local UE and the peer UE that successfully establishes), and a failed portion of a configuration (e.g., a configuration associated with the local UE and the peer UE that fails) can apply a configuration before the base station sends a configuration message to the local UE.

Alternatively, the base station performs a reconfiguration to the local UE and reconfigures a configuration of the terminal aggregator.

### Example 4:

FIG. 21 is another schematic diagram of an interaction of a failure feedback message among a local UE, a peer UE, and a base station provided by the embodiments of the present disclosure. As shown in FIG. 21, an interaction process of the failure feedback message in an embodiment includes S2110-S2140.

In S2110, the base station sends first connection configuration information to the anchor UE.

The explanation of the first connection configuration information refers to the description in above embodiments, which is not repeated herein.

In S2120, the anchor UE sends second connection configuration information to the non-anchor UE.

The explanation of the second connection configuration information refers to the description in above embodiments, which is not repeated herein.

In S2130, the anchor UE sends a failure feedback message to the base station.

In an embodiment, when the UE fails to establish a connection between the peer UE and the local UE, or fails to establish a connection between the local UE and the base station, the local UE applies a configuration before the base station sends a configuration message to the local UE, the local UE sends a failure feedback message (e.g., RRC Reconfiguration Failure SideLink or RRC Reconfiguration Failure, or other messages) to the base station. After the base station receives the failure feedback message, it is considered that the connection between the peer UE and the local UE fails, or the connection between the local UE and the base station fails. The failure message may carry a failure indication, so as to indicate that the connection between the peer UE and the UE fails, or the connection between the peer UE and the base station fails. A failure reason can also be carried, for example, the failure reason may be an encryption failure, a poor channel quality, etc.

In S2140, the base station indicates a failure message or a reconfiguration message to the non-anchor UE.

In an embodiment, the base station indicates a failure message (e.g., RRCReconfigurationFailureSidelink or RRCReconfigurationFailure, or other messages, etc.) to the peer UE. After the peer UE receives the failure message or the reconfiguration message, it is considered that the connection between the peer UE and the local UE fails, or the connection between the local UE and the base station fails, or the connection between the peer UE and the base station fails. The failure message may carry a failure indication, so as to indicate that the connection between the peer UE and the local UE fails, or the connection between the peer UE and the base station fails, or the connection between the local UE and the base station fails. A failure reason can also be carried, for example, the failure reason may be an encryption failure, a poor channel quality, etc. An identification of a peer UE that fails to establish a connection (e.g., an RNTI, or a target identification) can also be carried.

The failure message (e.g., RRCReconfigurationFailureSidelink or RRCReconfigurationFailure, etc.) fed back by the local UE to the base station can also be encapsulated as a message and carried by the failure message indicated by the base station to the peer UE. After the failure message is received, the peer UE applies a configuration before the base station or the local UE sends a configuration message to the peer UE, and can also apply a successful portion of a configuration (e.g., a configuration associated with the local UE and the peer UE that successfully establishes a connection with the local UE), and a failed portion of a configuration (e.g., a configuration associated with the local UE and the peer UE that fails to establish a connection with the local UE), or can apply a configuration before the base station sends a configuration message to the local UE.

In the sixth embodiment, wireless link failure occurs due to the signal quality deterioration between the anchor UE and the non-anchor UE. In the scheme of the terminal aggregator transmission, if a terminal cannot provide transmission traffic, other terminals need to be informed to cancel terminal aggregator transmission. In an embodiment, taking the first communication node being an anchor UE and the other first communication node as a non-anchor UE as an example, the transmission process of a failure indication message among the anchor UE, the non-anchor UEs and the base station is illustrated. The following examples may be included.

### Example 1:

FIG. 22 is another schematic diagram of an interaction of a first failure indication message between a local UE and a peer UE provided by the embodiments of the present disclosure. As shown in FIG. 22, an interaction process of the first failure indication message in an embodiment includes S2210.

In S2210, a first failure indication message sent by the non-anchor UE is received.

In an embodiment, the non-anchor UE indicates a failure message (i.e., the first failure indication message) to an anchor UE. When a wireless link failure occurs in the wireless connection established by the non-anchor with the base station, the non-anchor indicates the failure message (such as failure information or other messages) to the anchor UE. After the anchor UE receives the first failure indication message, it is considered that the connection between the non-anchor UE and the base station fails. The failure message may carry one of the following: carrying a failure indication, such as a connection failure between the non-anchor and the base station; carrying a failure reason, such as a poor channel quality, a timer expiration, etc.

After the first failure indication message is received, the anchor UE stops sending data to the non-anchor UE and stops receiving data from the non-anchor UE. A link between the anchor UE and the non-anchor UE is considered to be suspended, for example, a DRB of an aggregator traffic related to the UE is suspended, etc.

### Example 2:

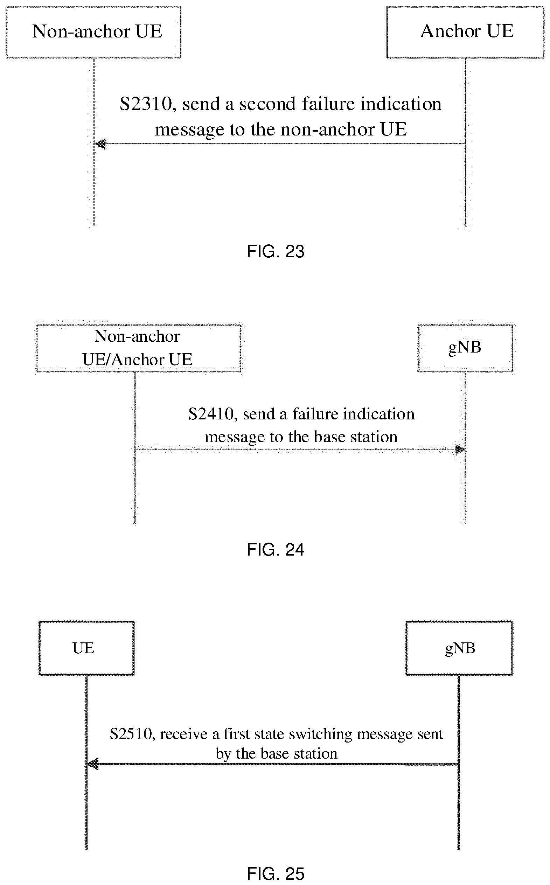

FIG. 23 is another schematic diagram of an interaction of a second failure indication message between a local UE and a peer UE provided by the embodiments of the present disclosure. As shown in FIG. 23, an interaction process of a second failure indication message in an embodiment includes S2310.

In S2310, a second failure indication message is sent to the non-anchor UE.

In an embodiment, the anchor UE indicates a failure message (i.e., the second failure indication message) to the non-anchor UE. When a wireless link failure occurs in the wireless connection between the anchor and the base station, the anchor indicates a failure message to the non-anchor UE, such as failure information or other messages. After the non-anchor UE receives the second failure indication message, it is considered that the connection between the anchor UE and the base station fails. The failure message can carry one of the following: carrying a failure indication, a connection failure between the anchor UE and the base station, or the like; carrying a failure reason, such as a poor channel quality, a timer expiration, etc.

After the second failure indication message is received, the non-anchor UE stops sending data to the anchor UE and stops receiving data from the anchor UE. Meanwhile, a link between the anchor UE and the non-anchor UE is considered to be suspended, for example, a DRB of the aggregator traffic related to the UE is suspended, etc.

### Example 3:

FIG. 24 is another schematic diagram of an interaction of a failure indication message between a UE and a base station provided by the embodiments of the present disclosure. As shown in FIG. 24, an interaction process of the failure indication message in an embodiment includes S2410. For example, the UE may be an anchor UE or a non-anchor UE.

In S2410, a failure indication message is sent to the base station.

In an embodiment, the anchor UE/non-anchor UE indicates the failure message to the base station. When a wireless link failure occurs in the wireless connection of the anchor UE with the base station, the non-anchor UE indicates a failure message to the base station, or when a wireless link failure occurs in the wireless connection of the non-anchor UE with the base station, the anchor UE indicates a failure message to the base station, or when a wireless link failure occurs in the wireless connection of the anchor UE with the non-anchor UE, the anchor UE/non-anchor UE indicates a failure message to the base station. For example, the failure message may be failure information or other messages.

The failure message can carry one of the following: carrying a failure indication, a connection failure between the anchor UE and the base station, a connection failure between the non-anchor UE and the base station, a connection failure between the anchor UE and the non-anchor UE, or the like; carrying a failure reason, such as a poor channel quality, a timer expiration, etc.

In the seventh embodiment, the base station selects some non-anchor UEs for the anchor UE. If these non-anchor UEs are in an idle state or an inactive state, then these UEs need to enter a connecting state before terminal aggregator transmission is started. In an embodiment, the process of switching a non-anchor UE from an idle state or an inactive state to a connecting state may include the following examples.

### Example 1:

FIG. 25 is another schematic diagram of an interaction of a first state switching message between a UE and a base station provided by the embodiments of the present disclosure. As shown in FIG. 25, an interaction process of the first state switching message in an embodiment includes S2510. For example, the UE may be a non-anchor UE.

In S2510, a first state switching message sent by the base station is received.

In an embodiment, if the base station finds that the non-anchor UE is in an idle state, the base station can trigger the non-anchor UE to enter a connecting state. The base station can send a message to the non-anchor UE over a radio interface to prompt the non-anchor UE to enter the connecting state.

After the base station acquires an identification of the non-anchor UE, the UE is found to be in the idle state or inactive, the base station can send a message to the UE to prompt the UE to enter the connecting state. For example, the identification of the non-anchor UE may be an S-TMSI or an RNTI. For example, the base station sends a paging message or other messages to the UE. Moreover, the S-TMSI or RNTI of the UE is carried in the message. The message can also carry an identification, so as to indicate the purpose (e.g., a terminal aggregator traffic, an assisted transmission, entering a connecting state, etc.) for the base station to send the message. After the UE receives the message, an AS layer of the UE can send an indication to a NAS layer, so as to indicate the UE to enter the connecting state, or the UE performs terminal aggregator transmission, etc. After the NAS layer receives the indication, the UE is considered to enter the connecting state.

### Example 2:

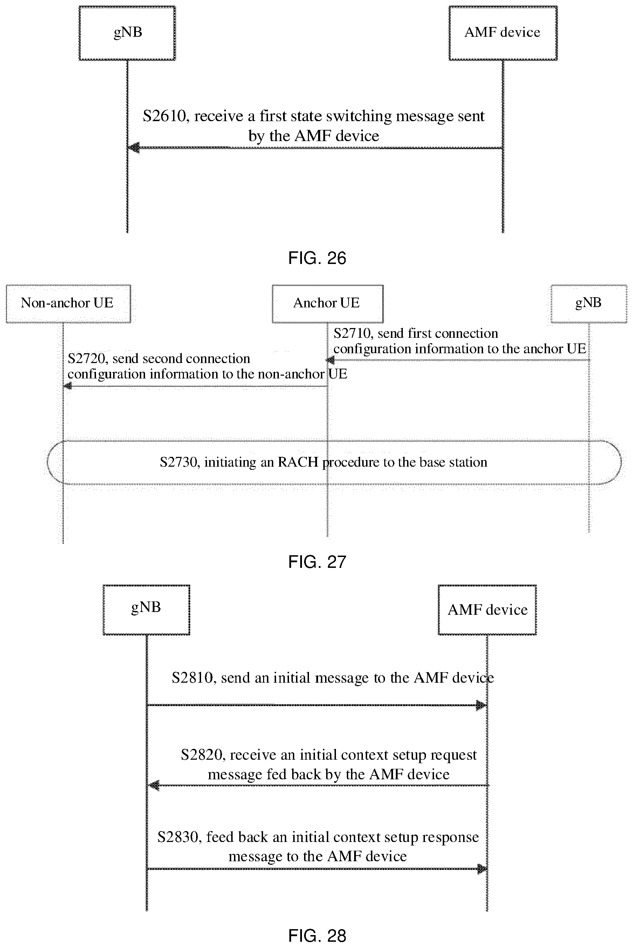

FIG. 26 is another schematic diagram of an interaction of a first state switching message between an AMF device and a base station provided by the embodiments of the present disclosure. As shown in FIG. 26, an interaction process of the first state switching message in an embodiment includes S2610. For example, the UE may be a non-anchor UE.

In S2610, a first state switching message sent by the AMF device is received.

In an embodiment, when the core network finds that the UE is in an idle state, the core network can send a message to the UE to prompt the UE to enter a connecting state. The core network first sends the message to the base station, and then the base station forwards the message to the UE, which refers to the above description of example 1. For example, the core network sends a paging message or other messages to the base station. The message carries an S-TMSI of the UE. The message can also carry an identification, so as to indicate a purpose (e.g., a terminal aggregator traffic, an assisted transmission, entering a connecting state, etc.) for the core network to send the message.

### Example 3:

When the base station finds that the non-anchor UE is in an idle state, the base station can trigger the non-anchor UE to enter the connecting state. The base station can send a configuration message to the non-anchor UE through the anchor UE to prompt the non-anchor UE to enter the connecting state.

FIG. 27 is a schematic diagram of an interaction of a RACH process among a base station, a local UE, and a peer UE provided by the embodiments of the present disclosure. As shown in FIG. 27, an interaction process of the RACH process in an embodiment includes S2710-S2730. For example, the local UE may be an anchor UE, and the peer UE may be a non-anchor UE.

In S2710, first connection configuration information is sent to the anchor UE.

In an embodiment, the base station may send the first connection configuration information between the non-anchor UE and the base station to the anchor UE, which refers to the description of the second embodiment. In addition, the base station may carry an RACH resource (e.g., a dedicated preamble resource), key configuration, SRB1, SRB2 configuration, etc., in the message (e.g., an RRCReconfiguration, etc.). The information can also be encapsulated.

In S2720, second connection configuration information is sent to the non-anchor UE.

In an embodiment, the anchor UE may send the second connection configuration information of the base station to the non-anchor UE, which refers to the description of the third embodiment. The base station may carry an RACH resource (e.g., a dedicated preamble resource), key configuration, SRB1, SRB2 configuration, etc., in the message (e.g., an RRCReconfigurationSidelink, etc.). The information can also be encapsulated.

In S2730, an RACH process is initiated to the base station.

In an embodiment, after the message is received, the non-anchor UE initiates the RACH process to the base station according to the above configuration message. The AS layer of the non-anchor UE can send an indication to the NAS layer to indicate the UE to enter a connecting state, or indicate that UE is called, or indicate that UE performs terminal aggregator transmission, etc. After the NAS layer receives the indication, the UE is considered to enter the connecting state.

### Example 4:

Under a situation that the base station triggers the non-anchor UE to enter the connecting state, the base station provides the non-anchor UE with a configuration (e.g., a key, SRB2, etc.), the base station needs to acquire key information, etc., of the UE from the core network. The base station triggers an establishment of a connection of an NG interface or an SI interface of the non-anchor UE.

FIG. 28 is a schematic diagram of an interaction of an initialized message between a base station and an AMF device provided by the embodiments of the present disclosure. As shown in FIG. 28, an interaction process required for entering a connecting state between the base station and the AMF device in an embodiment includes S2810-S2830.

In S2810, an initial message is sent to the AMF device.

In an embodiment, the base station sends the initial message (e.g., INITIAL UE MESSAGE, etc.) of the UE to the core network to trigger an establishment of a connection of an NG interface of the non-anchor UE. The message carries an identification of the UE, such as an S-TMSI of the non-anchor UE, etc. The message carries a reason for the establishment, such as, terminal aggregator transmission, etc.

In S2820, an initial context setup request message fed back by the AMF device is received.

In an embodiment, the core network sends an INITIAL CONTEXT SETUP REQUEST message to the base station, the message carrying information of a PDU session to be established, a key, etc.

In S2830, an initial context setup response message is fed back to the AMF device.

After the base station and UE (e.g., a non-anchor UE) successfully establish a connection, the base station feeds back the INITIAL CONTEXT SETUP Response to the core network.

### Example 5:

When the anchor UE wants non-anchor UE to assist the anchor UE to perform aggregator transmission, the non-anchor UE may be triggered to enter a connecting state to prepare for aggregator transmission.

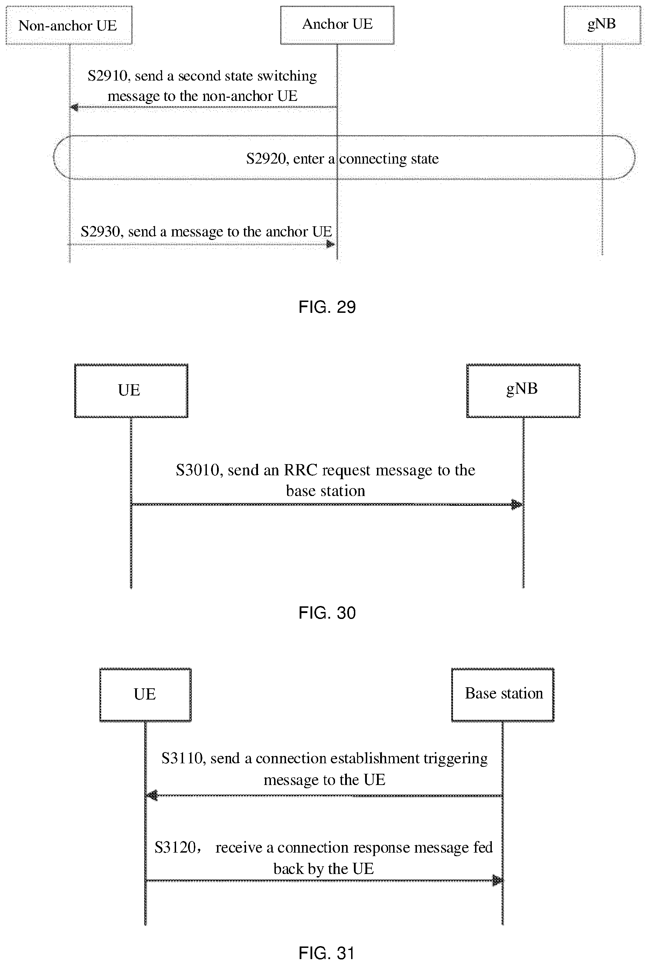

FIG. 29 is a schematic diagram of an interaction of a second state switching message between a base station, a local UE, and a peer UE provided by the embodiments of the present disclosure. As shown in FIG. 29, an interaction process of the second state switching message in an embodiment includes S2910-S2930. For example, the local UE may be an anchor UE, and the peer UE may be a non-anchor UE.

In S2910, a second state switching message is sent to the non-anchor UE.

In an embodiment, after the anchor UE sends the second state switching message to the non-anchor UE, the non-anchor UE is triggered to enter the connecting state. The message can be UECapabilityEnquirySidelink, RRCReconfigurationSidelink, a paging message or other messages. The message can carry an identification of a target cell, such as a physical cell identification, a cell identification, etc. The second state switching message can also carry an identification of a target base station, such as an identification of a base station, etc. The message can also carry a reason, such as: terminal aggregator transmission, an assisted transmission, being called, etc.

In S2920, a connecting state is entered.

In an embodiment, after the second state switching message by the non-anchor UE is received, the non-anchor UE is triggered to enter the connecting state. The AS layer of the UE of the non-anchor UE can send an indication to the NAS layer to indicate that the UE enter the connecting state, or UE is called, or the UE performs terminal aggregator transmission, etc. After the NAS layer receives the indication, the UE is triggered to enter the connecting state, for example, triggering a process of being called or calling.

In S2930, a message is sent to the anchor UE.

In an embodiment, after the non-anchor UE enter the connecting state, the non-anchor UE sends a message to the anchor UE to indicate a current state of the non-anchor UE. The message may be UE Capabilitylnformation SideLink, RRC Reconfiguration Complete SideLink or other messages. The message can carry the UE state, for example: the UE being in a connecting state, the UE being in an idle state, etc. The message can carry an identification of a cell that is connected with the UE, such as, a physical cell identification, a cell identification, etc. The message can carry an identification of a target base station, such as, an identification of a base station, etc.

### Example 6:

FIG. 30 is a schematic diagram of an interaction of an RRC request message between a base station and a UE provided by the embodiments of the present disclosure. As shown in FIG. 29, an interaction process of the RRC request message in an embodiment includes S3010. For example, the UE may be an anchor UE or a non-anchor UE.

In S3010, an RRC request message is sent to the base station.

In an embodiment, when the UE enters the connecting state, the base station is informed of a reason for an establishment. The message sent by the UE to the base station carries an indication. The message can be an RRCResumeRequest, a RRCResumeComplete, an RRCSetupRequest, an RRCSetupComplete, a RRCReestablishmentComplete, a RRCReestablishmentRequest, or other messages. The carried indication may be terminal aggregator transmission, leading transmission, assisted transmission, etc.

In the eighth embodiment, when a certain UE has low transmission efficiency and poor channel quality, the base station can trigger the UE to perform terminal aggregator transmission. The base station can also inform the UE of an identification of a candidate non-anchor UE to facilitate the UE to narrow a search scope.

FIG. 31 is a schematic diagram of an interaction of a connection establishment triggering message between a base station and a UE provided by the embodiments of the present disclosure. As shown in FIG. 31, an interaction process of the connection establishment triggering message in an embodiment includes S3110-S3120. For example, the UE may be an anchor UE or a non-anchor UE.

In S3110, a connection establishment triggering message is sent to the UE.

In S3120, a connection response message fed back by the UE is received.

In an embodiment, the base station sends a message to trigger the UE to establish a terminal aggregator or terminal connection. The message may be an RRC message, such as RRCReconfiguration, UElnformationRequest or other messages. The message can carry one of the following:
an indication for the UE to establish a sidelink connection, or for the UE to establish a connection with other UE, or for terminal aggregator transmission, etc.,
an identification of the UE that is a candidate for establishing a connection, such as a target identification of the peer UE, an S-TMSI, etc.

The UE can feed back a result of the base station, and the message can be an RRC message, such as RRCReconfigurationComplete, UElnformationResponse or other messages. The message can carry one of the following:
a success indication to indicate that the UE successfully establishes a sidelink connection, or the UE successfully establishes a connection with other UE, etc.,
an identification of the UE that successfully establishes a connection, such as an identification of the peer UE, an S-TMSI, etc.,
a capability of the UE that successfully establishes a connection, such as whether the UE supports terminal aggregator, a supported frequency point, etc.,
a measurement result for the UE that successfully establishes a connection to measure a downlink signal of the base station, such as: CQI, RSRP, RSRQ, etc.

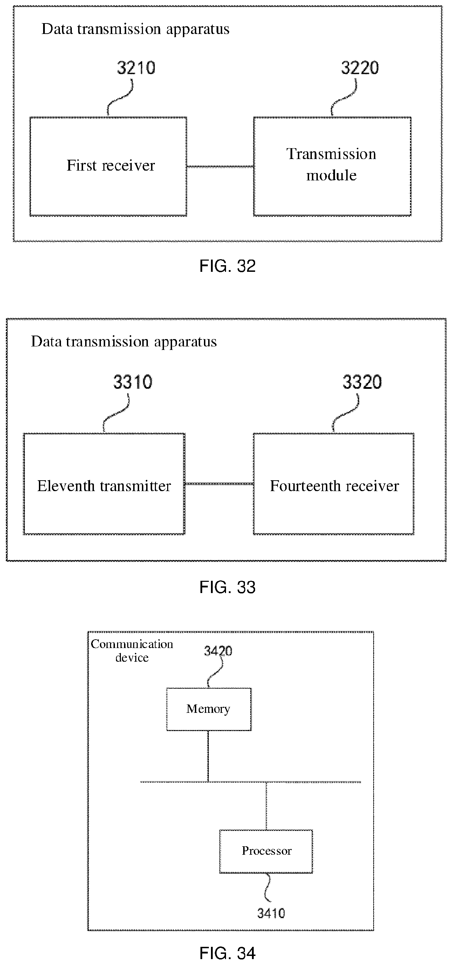

In an embodiment, FIG. 32 is a structural block diagram of a data transmission apparatus provided by the embodiments of the present disclosure. This embodiment is applied for a data transmission device. For example, the data transmission device may be a first communication node. As shown in FIG. 32, the data transmission device in an embodiment includes: a first receiver 3210 and a transmission module 3220.

The first receiver 3210 is configured to receive a TAC triggering condition pre-configured by a second communication node;
the transmission module 3220 is configured to transmit data to the second communication node according to a TAC mode in response to that the TAC triggering condition is met.

In an embodiment, the TAC triggering condition includes at least one of the following: a QoS of the first communication node meeting a corresponding QoS threshold value, the first communication node establishing a communication connection with other first communication node, the first communication node determining other first communication node that supports TAC.

In an embodiment, the QoS of the first communication node meeting the corresponding QoS threshold value includes at least one of the following:
a channel quality of the first communication node being lower than a channel quality threshold value; a received signal strength of the first communication node being lower than a received signal strength threshold value; a traffic volume of the first communication node being greater than a traffic volume threshold value; a traffic type of the first communication node meeting a traffic type of TAC or sidelink connection; a traffic latency of the first communication node being less than a traffic latency threshold value; a traffic packet loss rate of the first communication node being required to be less than a first packet loss rate threshold value; the traffic packet loss rate of the first communication node being greater than a second packet loss rate threshold value; a number of a retransmission of the first communication node being greater than a threshold value of a number of a retransmission; and a survival time of the first communication node being less than a survival time threshold value.

In an embodiment, before the TAC triggering condition pre-configured by the second communication node is received, the data transmission apparatus applied to the first communication node further includes:
a first transmitter, configured to send a function request message to a third communication node;
a second receiver, configured to receive a function response message corresponding to the function request message fed back by the third communication node.

In an embodiment, the function request message carries at least one of the following: an indication bit for supporting TAC; an indication bit for supporting copy function based TAC; an indication bit for supporting distribution function based TAC; frequency point information for supporting TAC; a communication node identification for TAC; an indication identification for supporting leading transmission based TAC; an indication identification for supporting assisted transmission based TAC; information of other communication node that jointly performs TAC.

In an embodiment, before the TAC triggering condition pre-configured by the second communication node is received, the data transmission apparatus applied to the first communication node further includes:
a second transmitter, configured to send user equipment (UE) capability information of the first communication node to the second communication node or other first communication node.

In an embodiment, the UE capability information includes at least one of the following: a supporting situation for TAC; a supporting situation for copy function based TAC; a supporting situation for distribution function based TAC; frequency point information for supporting TAC; a communication node identification used for TAC; a supporting situation for leading transmission based TAC; a supporting situation for assisted transmission based TAC; information of other communication node that jointly performs TAC.

In an embodiment, the first communication node supports TAC and meets the TAC triggering condition; the data transmission apparatus applied to the first communication node further includes:
a third transmitter, configured to send a TAC indication message to the second communication node.

In an embodiment, the TAC indication message includes at least one of the following:
an indication for expecting TAC; an indication for expecting leading transmission based TAC; an indication for expecting assisted transmission based TAC; an indication for expecting copy function based TAC; an indication for expecting distribution function based TAC; a reason for TAC or a reason for expecting TAC; a traffic identification for expecting TAC.

In an embodiment, the first communication node supports TAC, and the data transmission apparatus applied to the first communication node further includes:
a fourth transmitter, configured to send a node information report to the second communication node, where the node information report is used to represent information of other first communication node that establishes a connection with the first communication node.

In an embodiment, the node information report includes at least one of the following: indication information for the first communication node to support TAC; TAC capability information of other first communication node; a first communication node identification; a measurement result of other first communication node; a measurement result for the first communication node to measure other first communication node; a distance between the first communication node and other first communication node.

In an embodiment, the first communication node is a communication node that generates a data packet, and other first communication node is a communication node that forwards the data packet generated by the first communication node to the second communication node; the data transmission apparatus applied to the first communication node further includes:
a third receiver, configured to receive first reconfiguration information sent by the second communication node.

In an embodiment, the first reconfiguration information includes at least one of the following:
configuring an identification of other first communication node for the first communication node; configuring a traffic identification supporting TAC for the first communication node; configuring a deleted-traffic identification supporting TAC for the first communication node; configuring configuration information of a first interface corresponding to the first communication node for the first communication node; configuring a packet data convergence protocol (PDCP) function for the first communication node; configuring connection configuration information between the first communication node and other first communication node for the first communication node; configuring an association of a data resource bearer (DRB) or a PDCP of the first interface associated with first communication node, and a DRB or a PDCP between the first communication node and other first communication node for the first communication node; configuring an association of a DRB or a PDCP of the first interface associated with first communication node, and a DRB or a logical channel of other first communication node for the first communication node; configuring an identification of the first communication node for other first communication node; configuring a traffic identification supporting TAC for other first communication node; configuring a deleted-traffic identification supporting TAC for other first communication node; configuring configuration information of a first interface corresponding to other first communication node for the other first communication node; configuring connection configuration information between the first communication node and other first communication node for the first communication node and the other first communication node; configuring an association of a DRB or a logical channel of the first interface associated with other first communication node, and a DRB or a logical channel between the first communication node and the other first communication node for the other first communication node; configuring an association of a DRB or a PDCP of the first interface associated with other first communication node, and a DRB or a logical channel of the other first communication node for the other first communication node.

In an embodiment, bearer information of the first reconfiguration information is a radio resource control (RRC) message; the RRC message includes one of the following: configuration information for the first communication node; configuration information for other first communication node; configuration information for the first communication node and other first communication node.

In an embodiment, sidelink communication is performed between the first communication node and other first communication node, and the data transmission apparatus applied to the first communication node further includes:
a fifth transmitter, configured to send second reconfiguration information to the other first communication node.

In an embodiment, the second reconfiguration information includes at least one of the following: configuring an identification of the first communication node for other first communication node; configuring a traffic identification supporting TAC for other first communication node; configuring a deleted-traffic identification supporting TAC for other first communication node; configuring configuration information of a first interface corresponding to other first communication node for the other first communication node; configuring connection configuration information between the first communication node and other first communication node for the first communication node and the other first communication node; configuring an association of a DRB or a logical channel of the first interface associated with other first communication node, and a DRB or a logical channel between the first communication node and the other first communication node for the other first communication node; configuring an association of a DRB or a PDCP of the first interface associated with other first communication node, and a DRB or a logical channel of the other first communication node for the other first communication node.

In an embodiment, bearer information of the second reconfiguration information is an RRC message; the RRC message includes: configuring a traffic identification supporting TAC for other first communication node; configuring a deleted-traffic identification supporting TAC for other first communication node; configuring configuration information of a first interface corresponding to other first communication node for the other first communication node.

In an embodiment, sidelink communication is performed between the first communication node and other first communication node, and the data transmission apparatus applied to the first communication node further includes:
a fourth receiver, configured to receive third reconfiguration information sent by the second communication node.

In an embodiment, the third reconfiguration information includes at least one of the following: configuring an identification of other first communication node for the first communication node; configuring a traffic identification supporting TAC for the first communication node; configuring a deleted-traffic identification supporting TAC for the first communication node; configuring configuration information of a first interface corresponding to the first communication node for the first communication node; configuring a PDCP function for the first communication node; configuring connection configuration information between the first communication node and other first communication node for the first communication node; configuring an association of a data resource bearer (DRB) or a PDCP of the first interface associated with first communication node, and a DRB or a logical channel between the first communication node and other first communication node for the first communication node; configuring an association of a DRB or a PDCP of the first interface associated with first communication node, and a DRB or a logical channel of other first communication node for the first communication node.

In an embodiment, bearer information of the third reconfiguration information is an RRC message; the RRC message includes: configuring an identification of other first communication node for the first communication node; configuring a traffic identification supporting TAC for the first communication node; configuring a deleted-traffic identification supporting TAC for the first communication node; configuring configuration information of a first interface corresponding to the first communication node for the first communication node; configuring a PDCP function for the first communication node.

In an embodiment, a terminal aggregator based terminal connection is established between the first communication node and other first communication node, and the data transmission apparatus applied to the first communication node further includes:
a fifth receiver, configured to receive a communication request message sent by the other first communication node;
a first feedback module, configured to feed back a communication response message corresponding to the communication request message to the other first communication node.

In an embodiment, the communication request message includes at least one of the following: a message for the first communication node to expect TAC; a message for the first communication node to expect copy function based TAC, a message for the first communication node to expect distribution function based TAC; a message for the first communication node to expect the TAC supporting assisted transmission and supporting a data forwarding function; an identification of the first communication node; a QoS parameter of the TAC; a second communication node identification or a cell identification corresponding to the first communication node.

The communication response message includes at least one of the following: an identification of the first communication node; a QoS parameter of TAC; a second communication node identification or a cell identification corresponding to the first communication node.

In an embodiment, transmitting data to the second communication node according to a TAC mode includes:
transmitting the data to other first communication node according to the TAC mode, so as to make the other first communication node transmit the data to the second communication node.

In an embodiment, before transmitting data to the second communication node according to a TAC mode, further including:
sending a first connection confirmation message to the second communication node through the other first communication nodes corresponding to the first communication node; sending a second connection confirmation message to the second communication node.

In an embodiment, before transmitting data to the second communication node according to a TAC mode, further including:
receiving a third connection confirmation message sent by other first communication node;
sending the third connection confirmation message to the second communication node.

In an embodiment, the first connection confirmation message, the second connection confirmation message and the third connection confirmation message all include: a node identification of the other first communication node that successfully establishes a connection; or, a node identification of the other first communication node that fails to establish a connection and a failure reason.

In an embodiment, the first communication node is a communication node that generates a data packet; the data transmission apparatus applied to the first communication node further includes:
a sixth receiver, configured to receive a starting transmission triggering message sent by the second communication node.

In an embodiment, the starting transmission triggering message includes one of the following: an RRC message; a medium access control-control element (MAC CE) message;
where the RRC message carries at least one of the following: an identification bit for a terminal aggregator being successfully established; a DRB identification for supporting a terminal aggregator; and a first communication node identification for successfully establishing a terminal aggregator traffic;
the MAC CE message carries one of the following: an identification bit for a terminal aggregator being successfully established; and an identification bit for starting transmission.

In an embodiment, the starting transmission triggering message includes: a feedback duration of the connection confirmation message reaches a preset duration.

In an embodiment, the first communication node fails to establish a connection with other first communication node, the data transmission apparatus applied to the first communication node further includes:
a seventh receiver, configured to receive a failure feedback message sent by the other first communication node; where the failure feedback message includes: a failure indication, or a failure reason.

In an embodiment, the first communication node fails to establish a connection with other first communication node, the data transmission apparatus applied to the first communication node further includes:
a sixth transmitter, configured to send a failure feedback message to the second communication node, so as to make the second communication node indicate a failure message or a reconfiguration message to the other first communication node according to the failure feedback message; where the failure feedback message includes: a failure indication, or, a failure reason.

In an embodiment, the first communication node fails to establish a connection with other first communication node, the data transmission apparatus applied to the first communication node further includes:
an eighth receiver, configured to receive a failure message or a reconfiguration message indicated by the second communication node according to a failure feedback message sent by the other first communication node.

In an embodiment, a situation that a wireless connection failure occurs in a wireless connection between other first communication node and the second communication node, the data transmission device applied to the first communication node further includes:
a ninth receiver, configured to receive a first failure indication message sent by the other first communication node;
a seventh transmitter, configured to send the first failure indication message to the second communication node.

In an embodiment, a situation that a wireless connection failure occurs in a wireless connection between the first communication nodes and the second communication node, the data transmission apparatus applied to the first communication node further includes:
an eighth transmitter, configured to send a second failure indication message to other first communication node, so as to make the other first communication node send the second failure indication message to the second communication node.

In an embodiment, the first communication node is configured to forward a data packet generated by other first communication node, and the first communication node is in an idle state; the data transmission apparatus applied to the first communication node further includes:
a tenth receiver, configured to receive a first state switching message sent by the second communication node;
a switching module, configured to switch from the idle state to a connecting state according to the first state switching message.

In an embodiment, the first connection configuration message or the second connection configuration message carries an RACH resource.

In an embodiment, the data transmission apparatus applied to the first communication node further includes:
an eleventh receiver, configured to receive an interface connection establishment request triggered by the second communication node, so as to make the first communication node switch to an connecting state.

In an embodiment, the first communication node is configured to forward a data packet generated by other first communication node, and the first communication node is in an idle state; the data transmission apparatus applied to the first communication node further includes:
a twelfth receiver, configured to receive a second state switching message sent by the other first communication node and trigger the first communication node to switch to a connecting state.

In an embodiment, the data transmission apparatus applied to the first communication node further includes:
a tenth transmitter, configured to send an RRC request message to the second communication node, the RRC request message carrying a reason for establishing a connection.

In an embodiment, the data transmission apparatus applied to the first communication node further includes:
a thirteenth receiver, configured to receive a connection establishment triggering message sent by the second communication node;
the connection establishment triggering message includes at least one of the following: an indication for establishing an aggregator transmission or a sidelink connection; an identification of the first communication node that is a candidate for establishing a connection; an indication for successfully establishing a connection; an identification of the first communication node that successfully establishes a connection; UE capability information for successfully establishing a connection; a measurement result for the first communication node that successfully establishes a connection to measure a downlink signal of the second communication node.

The data transmission apparatus applied to the first communication node provided by the embodiments is used to implement the data transmission method in the embodiments shown in FIG. 2, and the implementation principle and technical effect of the data transmission apparatus applied to the first communication node are similar to that of the data transmission method, which is not repeated herein.

FIG. 33 is another structural block diagram of a data transmission apparatus provided by the embodiments of the present disclosure. This embodiment is applied for a data transmission device. For example, the data transmission device may be a second communication node. As shown in FIG. 33, the data transmission device in an embodiment includes: an eleventh transmitter 3310 and a fourteenth receiver 3320.

The eleventh transmitter 3310 is configured to send a pre-configured terminal aggregator transmission (TAC) triggering condition to a first communication node;
the fourteenth receiver 3320 is configured to receive data sent by the first communication node according to a TAC mode.

In an embodiment, the data transmission apparatus applied to the second communication node further includes:
a fifteenth receiver, configured to receive a communication establishment request message sent by a third communication node;
a feedback module, configured to feed back a communication establishment response message corresponding to the communication establishment request message to the third communication node.

In an embodiment, the communication establishment request message includes at least one of the following: indication information that the first communication node is authorized to support TAC; information of other first communication node that jointly performs TAC; UE capability information of other first communication node that jointly performs TAC; frequency point information supporting TAC; and a traffic that support TAC.

In an embodiment, the data transmission apparatus applied to the second communication node further includes:
a sixteenth receiver, configured to receive UE capability information sent by the first communication node.

In an embodiment, the first communication node supports TAC and meets the TAC triggering condition; the data transmission apparatus applied to the second communication node further includes:
a seventeenth receiver, configured to receive TAC indication information sent by the first communication node.

In an embodiment, the first communication node supports TAC, and the data transmission apparatus applied to the second communication node further includes:
an eighteenth receiver, configured to receive a node information report sent by the first communication node; where the node information report is used to characterize information of other first communication node that establishes a connection with the first communication node.

In an embodiment, the first communication node is a communication node that generates a data packet, and other first communication node is a communication node that forwards the data packet generated by the first communication node to the second communication node, and the data transmission apparatus applied to the second communication node further includes:
a twelfth transmitter, configured to send first reconfiguration information to the first communication node.

In an embodiment, the first communication node is a communication node that generates a data packet; the data transmission apparatus applied to the second communication node further includes:
a thirteenth transmitter, configured to send a starting transmission triggering message to the first communication node.

In an embodiment, the first communication node fails to establish a connection with other first communication node, the data transmission apparatus applied to the second communication node further includes:
a nineteenth receiver, configured to receive a failure feedback message sent by the first communication node, indicate a failure message or a reconfiguration message to the other first communication node according to the failure feedback message; where the failure feedback message includes: a failure indication, or a failure reason.

In an embodiment, the first communication node fails to establish a connection with other first communication node, the data transmission apparatus applied to the second communication node further includes:
a twentieth receiver, configured to receive a failure feedback message sent by other first communication node;
an indication module, configured to indicate a failure message or a reconfiguration message to the first communication node according to the failure feedback message; where the failure feedback message includes: a failure indication, or a failure reason.

In an embodiment, the first communication node is used to forward a data packet generated by other first communication node, and the first communication node is in an idle state; the data transmission apparatus applied to the second communication node further includes:
a fourteenth transmitter, configured to send a first state switching message to the first communication node, so as to make the first communication node switch from the idle state to a connecting state according to the first state switching message.

The data transmission apparatus applied to the second communication node provided by the embodiments is used to implement the data transmission method in the embodiments shown in FIG. 3, and the implementation principle and technical effect of the data transmission apparatus applied to the second communication node are similar to that of the data transmission method, which is not repeated herein.

FIG. 34 is a structural schematic diagram of a data transmission device provided by the embodiments of the present disclosure. As shown in FIG. 34, the data transmission device provided by the present disclosure includes: a processor 3410 and a memory 3420. A number of the processor 3410 in the device may be one or more, and one processor 3410 is taken as an example in FIG. 34. A number of the memory 3420 in the device may be one or more, and one memory 3420 is taken as an example in FIG. 34. The processor 3410 and the memory 3420 in the device may be connected by a bus or in other ways, and FIG. 34 is described by taking an example in which the processor 3410 and the memory 3420 are connected by the bus. In an embodiment, the device may be a terminal side (e.g., a user equipment).

As a computer-readable storage medium, the memory 3420 may be configured to store a software program, a computer-executable program, and a module, such as a program instruction/module corresponding to the data transmission method described in any embodiment of the present disclosure (e.g., the first receiver 3210 and the transmission module 3220 in the data transmission apparatus). The memory 3420 may include an area for storing a program and an area for storing data, where the area for storing a program may store an operating system, and a program required by at least one function; the area for storing data may store data generated by a usage of a device. In addition, the memory 3420 may include a high-speed random access memory, and may also include a non-volatile memory, such as at least one magnetic disk storage device, a flash memory device, or other non-volatile solid state storage devices. In some examples, the memory 3420 may further include memories located remotely with respect to the processor 3410, and these remote memories may be connected to the device via a network. Examples of the network include, but are not limited to, the Internet, corporate intranets, local area networks, mobile communication networks, and combinations thereof.

Under a situation where the data transmission device is the first communication node, the device provided above can be configured to execute the data transmission method provided by any of the above embodiments, and has corresponding functions and effects.

Under a situation where the data transmission device is the second communication node, the device provided above can be configured to execute the data transmission method provided by any of the above embodiments, and has corresponding functions and effects.

The embodiments of the present disclosure further provide a storage medium including computer-executable instructions. The computer-executable instructions, upon being executed by a computer processor, are used to perform a data transmission method applied to a first communication node. The method includes: receiving a terminal aggregator communication (TAC) triggering condition pre-configured by a second communication node; in response to that the TAC triggering condition is met, transmitting data to the second communication node according to a TAC mode.

The embodiments of the present disclosure further provide a storage medium including computer-executable instructions. The computer-executable instructions, upon being executed by a computer processor, are used to perform a data transmission method applied to a second communication node. The method includes: sending a pre-configured terminal aggregator transmission (TAC) triggering condition to a first communication node; and receiving data sent by the first communication node according to a TAC mode.

Those skilled in the art may understand that the term "user equipment" covers any suitable type of wireless user equipment, such as a mobile phone, a portable data processing apparatus, a portable web browser, or a vehicle-mounted mobile station.

In general, various embodiments of the present disclosure may be implemented in hardware, special purpose circuits, software, logic or any combination thereof. For example, in some aspects, the embodiments may be implemented in hardware, while in other aspects, the embodiments may be implemented in firmware or software which may be executed by a controller, a microprocessor or other computing apparatuses, though the present disclosure is not limited thereto.

The embodiments of the present disclosure may be implemented by a data processor of a mobile apparatus executing computer program instructions, e.g., in a processor entity, or by hardware, or by a combination of software and hardware. Computer program instructions may be assembly instructions, instruction set architecture (ISA) instructions, machine instructions, machine-related instructions, microcode, firmware instructions, state setting data, or source code or object code written in any combination of one or more programming languages.

The block diagram of any logical process in the drawings of the present disclosure may represent program steps, or may represent interconnected logical circuits, modules, and functions, or may represent a combination of program steps, logical circuits, modules, and functions. Computer programs may be stored on a memory. The memory may be of any type suitable for the local technical environment and may be implemented by using any suitable data storage technology, which, for example, includes but is not limited to a read-only memory (ROM), a random access memory (RAM), an optical memory device and system (digital video disk (DVD) or compact disk (CD)). The computer readable medium may include a non-transitory storage medium. The data processor may be of any type suitable to the local technical environment, such as, but not limited to, a general purpose computer, a special purpose computer, a microprocessor, a digital signal processor (DSP), an application specific integrated circuit (ASIC), a field-programmable gate array (FPGA), and a processor based on a multi-core processor architecture.

## Claims

1. A data transmission method, applied to a first communication node, wherein the method comprises:
receiving a terminal aggregator communication, TAC, triggering condition pre-configured by a second communication node;
in response to that the TAC triggering condition is met, transmitting data to the second communication node according to a TAC mode.

2. The method according to claim 1, wherein the TAC triggering condition comprises at least one of the following: a quality of service, QoS, of the first communication node meeting a corresponding QoS threshold value, the first communication node establishing a communication connection with other first communication node, and the first communication node determining other first communication node that supports TAC.

3. The method according to claim 1, wherein the QoS of the first communication node meeting the corresponding QoS threshold value includes at least one of the following:
a channel quality of the first communication node being lower than a channel quality threshold value; a received signal strength of the first communication node being lower than a received signal strength threshold value; a traffic volume of the first communication node being greater than a traffic volume threshold value; a traffic type of the first communication node meeting a traffic type of TAC or sidelink connection; a traffic latency of the first communication node being less than a traffic latency threshold value; a traffic packet loss rate of the first communication node being required to be less than a first packet loss rate threshold value; the traffic packet loss rate of the first communication node being greater than a second packet loss rate threshold value; a number of a retransmission of the first communication node being greater than a threshold value of a number of a retransmission; and a survival time of the first communication node being less than a survival time threshold value.

4. The method according to claim 1, before the receiving the TAC triggering condition pre-configured by the second communication node, further comprising:
sending a function request message to a third communication node;
receiving a function response message corresponding to the function request message fed back by the third communication node.

5. The method according to claim 4, wherein the function request message carries at least one of the following: an indication bit for supporting TAC; an indication bit for supporting copy function based TAC; an indication bit for supporting distribution function based TAC; frequency point information for supporting TAC; a communication node identification for TAC; an indication identification for supporting leading transmission based TAC; an indication identification for supporting assisted transmission based TAC; information of other communication node that jointly performs TAC.

6. The method according to claim 1, before the receiving the TAC triggering condition pre-configured by the second communication node, further comprising:
sending user equipment, UE, capability information of the first communication node to the second communication node or other first communication node.

7. The method according to claim 6, wherein the UE capability information comprises at least one of the following: a supporting situation for TAC; a supporting situation for copy function based TAC; a supporting situation for distribution function based TAC; frequency point information for supporting TAC; a communication node identification for TAC; a supporting situation for leading transmission based TAC; a supporting situation for assisted transmission based TAC; information of other communication nodes that jointly performs TAC.

8. The method according to claim 1, wherein the first communication node supports TAC and meets the TAC triggering condition, and the method further comprises:
sending a TAC indication message to the second communication node.

9. The method according to claim 8, wherein the TAC indication message comprises at least one of the following:
an indication for expecting TAC; an indication for expecting leading transmission based TAC; an indication for expecting assisted transmission based TAC; an indication for expecting copy function based TAC; an indication for expecting distribution function based TAC; a reason for TAC or a reason for expecting TAC; a traffic identification for expecting TAC.

10. The method according to claim 1, wherein the first communication node supports TAC, and the method further comprises:
sending a node information report to the second communication node, wherein the node information report is used to represent information of other first communication node that establishes a connection with the first communication node.

11. The method according to claim 10, wherein the node information report comprises at least one of the following: indication information for the first communication node to support TAC; TAC capability information of other first communication node; a first communication node identification; a measurement result of other first communication node; a measurement result for the first communication node to measure other first communication node; a distance between the first communication node and other first communication node.

12. The method according to claim 1, wherein the first communication node is a communication node that generates a data packet, and other first communication node is a communication node that forwards the data packet generated by the first communication node to the second communication node; wherein the method further comprises:
receiving first reconfiguration information sent by the second communication node;
wherein the first reconfiguration information comprises at least one of the following: configuring an identification of other first communication node for the first communication node; configuring a traffic identification supporting TAC for the first communication node; configuring a deleted-traffic identification supporting TAC for the first communication node; configuring configuration information of a first interface corresponding to the first communication node for the first communication node; configuring a packet data convergence protocol, PDCP, function for the first communication node; configuring connection configuration information between the first communication node and other first communication node for the first communication node; configuring an association of a data resource bearer, DRB, or a PDCP of the first interface associated with first communication node, and a DRB or a PDCP of the first interface between the first communication node and other first communication node for the first communication node; configuring an association of a DRB or a PDCP of the first interface associated with first communication node, and a DRB or a logical channel of other first communication node for the first communication node; configuring an identification of the first communication node for other first communication node; configuring a traffic identification supporting TAC for other first communication node; configuring a deleted-traffic identification supporting TAC for other first communication node; configuring configuration information of a first interface corresponding to other first communication node for the other first communication node; configuring connection configuration information between the first communication node and other first communication node for the first communication node and the other first communication node; configuring an association of a DRB or a logical channel of the first interface associated with other first communication node, and a DRB or a logical channel between the first communication node and the other first communication node for the other first communication node; configuring an association of a DRB or a PDCP of the first interface associated with other first communication node, and a DRB or a logical channel of the other first communication node for the other first communication node.

13. The method according to claim 12, wherein bearer information of the first reconfiguration information is a radio resource control, RRC, message; the RRC message comprises one of the following: configuration information for the first communication node; configuration information for other first communication node; configuration information for the first communication node and other first communication node.

14. The method according to claim 1, wherein sidelink communication is performed between the first communication node and other first communication node, wherein the method further comprises:
sending second reconfiguration information to the other first communication node; wherein the second reconfiguration information comprises at least one of the following: configuring an identification of the first communication node for other first communication node; configuring a traffic identification supporting TAC for other first communication node; configuring a deleted-traffic identification supporting TAC for other first communication node; configuring configuration information of a first interface corresponding to other first communication node for the other first communication node; configuring connection configuration information between the first communication node and other first communication nod for the first communication node and the other first communication node; configuring an association of a DRB or a logical channel of the first interface associated with other first communication node, and a DRB or a logical channel between the first communication node and the other first communication node for the other first communication node; configuring an association of a DRB or a PDCP of the first interface associated with other first communication node, and a DRB or a logical channel of the other first communication node for the other first communication node.

15. The method according to claim 14, wherein bearer information of the second reconfiguration information is an RRC message; the RRC message comprises: configuring a traffic identification supporting TAC for other first communication node; configuring a deleted-traffic identification supporting TAC for other first communication node; configuring configuration information of a first interface corresponding to other first communication node for the other first communication node.

16. The method according to claim 1, wherein sidelink communication is performed between the first communication node and other first communication node, wherein the method further comprises:
receiving third reconfiguration information sent by the second communication node;
wherein the third reconfiguration information comprises at least one of the following: configuring an identification of the other first communication node for the first communication node; configuring a traffic identification supporting TAC for the first communication node; configuring a deleted-traffic identification supporting TAC for the first communication node; configuring configuration information of a first interface corresponding to the first communication node for the first communication node; configuring a PDCP function for the first communication node; configuring connection configuration information between the first communication node and other first communication node for the first communication node; configuring an association of a data resource bearer, DRB, or a PDCP of the first interface associated with first communication node, and a DRB or a logical channel between the first communication node and other first communication node for the first communication node; configuring an association of a DRB or a PDCP of the first interface associated with first communication node, and a DRB or a logical channel of other first communication node for the first communication node.

17. The method according to claim 16, wherein bearer information of the third reconfiguration information is an RRC message; wherein the RRC message comprises: configuring a traffic identification supporting TAC for the first communication node; configuring a deleted-traffic identification supporting TAC for the first communication node; configuring configuration information of a first interface corresponding to the first communication node for the first communication node; configuring a PDCP function for the first communication node.

18. The method according to claim 1, wherein a terminal aggregator based terminal connection is established between the first communication node and other first communication nodes, wherein the method further comprises:
receiving a communication request message sent by the other first communication node;
feeding back a communication response message corresponding to the communication request message to the other first communication node.

19. The method according to claim 18, wherein the communication request message comprises at least one of the following: a message for the first communication node to expect TAC; a message for the first communication node to expect copy function based TAC, a message for the first communication node to expect distribution function based TAC; a message for the first communication node to expect TAC, supporting assisted transmission and supporting a data forwarding function; an identification of the first communication node; a QoS parameter of TAC; a second communication node identification or a cell identification corresponding to the first communication node;
the communication response message comprises at least one of the following: an identification of the first communication node; a QoS parameter of TAC; a second communication node identification or a cell identification corresponding to the first communication node.

20. The method according to claim 1, wherein the transmitting the data to the second communication node according to the TAC mode comprises:
transmitting the data to other first communication node according to the TAC mode, so as to make the other first communication node to transmit the data to the second communication node.

21. The method according to claim 20, before the transmitting the data to the second communication node according to the TAC mode, the method further comprises:
sending a first connection confirmation message to the second communication node through the other first communication node corresponding to the first communication node;
sending a second connection confirmation message to the second communication node.

22. The method according to claim 21, before the transmitting the data to the second communication node according to the TAC mode, the method further comprises TAC mode:
receiving a third connection confirmation message sent by other first communication node;
sending the third connection confirmation message to the second communication node.

23. The method according to claim 21 or 22, wherein the first connection confirmation message, the second connection confirmation message and the third connection confirmation message all comprise: a node identification of the other first communication node that successfully establishes a connection; or, a node identification of the other first communication node that fails to establish a connection and a failure reason.

24. The method according to claim 1, wherein the first communication node is a communication node that generates a data packet, wherein the method further comprises:
receiving a starting transmission triggering message sent by the second communication node,
wherein the starting transmission triggering message comprises one of the following: an RRC message; a medium access control-control element, MAC CE, message;
wherein the RRC message carries at least one of the following: an identification bit for a terminal aggregator being successfully established; a DRB identification supporting a terminal aggregator; and a first communication node identification for successfully establishing a terminal aggregator traffic;
the MAC CE message carries one of the following: an identification bit for a terminal aggregator being successfully established; and an identification bit for starting transmission.

25. The method according to claim 1, wherein the first communication node fails to establish a connection with other first communication node, wherein the method further comprises:
receiving a failure feedback message sent by the other first communication node; wherein the failure feedback message comprises: a failure indication, or a failure reason.

26. The method according to claim 1, wherein the first communication node fails to establish a connection with other first communication nodes, wherein the method further comprises:
sending a failure feedback message to the second communication node, so as to make the second communication node indicate a failure message or a reconfiguration message to the other first communication node according to the failure feedback message; wherein the failure feedback message comprises: a failure indication, or, a failure reason.

27. The method according to claim 1, wherein the first communication node fails to establish a connection with other first communication node, and the method further comprises:
receiving a failure message or a reconfiguration message indicated by the second communication node according to a failure feedback message sent by the other first communication node.

28. The method according to claim 1, wherein a situation that a wireless connection failure occurs in a wireless connection between other first communication node and the second communication node, wherein the method further comprises:
receiving a first failure indication message sent by the other first communication node;
sending the first failure indication message to the second communication node.

29. The method according to claim 1, wherein a situation that a wireless connection failure occurs in a wireless connection between the first communication node and the second communication node, wherein the method further comprises:
sending a second failure indication message to other first communication node, so as to make the other first communication node send the second failure indication message to the second communication node.

30. The method according to claim 1, wherein the first communication node is configured to forward a data packet generated by other first communication node, and the first communication node is in an idle state; wherein the method further comprises:
receiving a first state switching message sent by the second communication node;
switching from the idle state to a connecting state according to the first state switching message.

31. The method according to claim 1, wherein the first communication node is configured to forward a data packet generated by other first communication node, and the first communication node is in an idle state; wherein the method further comprises:
receiving at least one of first connection configuration information and second connection configuration information sent by the second communication node, wherein the first connection configuration message or the second connection configuration message carries a random access channel, RACH, resource.

32. The method according to claim 1, wherein the first communication node is configured to forward a data packet generated by other first communication node, and the first communication node is in an idle state; wherein the method further comprises:
receiving an interface connection establishment request triggered by the second communication node, so as to make the first communication node switch to a connecting state.

33. The method according to claim 1, wherein the first communication node is configured to forward a data packet generated by other first communication node, and the first communication node is in an idle state; wherein the method further comprises:
receiving a second state switching message sent by the other first communication node and triggering the first communication node to switch to a connecting state.

34. The method according to claim 1, further comprising:
sending an RRC request message to the second communication node, wherein the RRC request message carries a reason for establishing a connection.

35. The method according to claim 1, further comprising:
receiving a connection establishment triggering message sent by the second communication node;
the connection establishment triggering message includes at least one of the following: an indication for establishing an aggregator transmission or a sidelink connection; an identification of the first communication node that is a candidate for establishing a connection; an indication for successfully establishing a connection; an identification of the first communication node that successfully establishes a connection; UE capability information for successfully establishing a connection; a measurement result for the first communication node that successfully establishes a connection to measure a downlink signal of the second communication node.

36. A data transmission method, applied to a second communication node, wherein the method comprises:
sending a pre-configured terminal aggregator transmission, TAC, triggering condition to a first communication node;
receiving data sent by the first communication node according to a TAC mode.

37. The method according to claim 36, further comprising:
receiving a communication establishment request message sent by a third communication node;
feeding back a communication establishment response message corresponding to the communication establishment request message to the third communication node.

38. The method according to claim 37, wherein the communication establishment request message comprises at least one of the following: indication information that the first communication node is authorized to support TAC; information of other first communication node that jointly performs TAC; UE capability information of other first communication node that jointly performs TAC; frequency point information supporting TAC; and a traffic that supports TAC.

39. A communication device, comprising: a memory, and at least one processor;
the memory is configured to store at least one program,
wherein the at least one program, upon being executed by the at least one processor, causes the at least one processor to implement the method according to any of claims 1-35 or 36-38.

40. A storage medium having stored thereon a computer program, wherein the computer program, upon being executed by a processor, implements the method according to any of claims 1-35 or 36-38.
